(19) Europäisches Patentamt / European Patent Office / Office européen des brevets

(11) **EP 3 643 999 B1**

(12) **EUROPEAN PATENT SPECIFICATION**

(45) Date of publication and mention
of the grant of the patent:
**13.08.2025 Bulletin 2025/33**

(21) Application number: **18820842.5**

(22) Date of filing: **11.01.2018**

(51) International Patent Classification (IPC):
*F25B 15/06* (2006.01)   *F25B 37/00* (2006.01)
*F25B 39/02* (2006.01)   *F25B 41/00* (2021.01)
*F25D 31/00* (2006.01)   *F25D 19/00* (2006.01)
*C22C 38/00* (2006.01)   *B21C 1/22* (2006.01)
*B21C 37/08* (2006.01)   *B21D 53/06* (2006.01)
*B23K 9/025* (2006.01)   *B23K 11/00* (2006.01)
*B23K 11/06* (2006.01)   *B23K 13/02* (2006.01)
*C21D 1/76* (2006.01)   *C21D 1/26* (2006.01)
*C21D 6/00* (2006.01)   *C21D 8/10* (2006.01)
*C21D 9/08* (2006.01)   *C22C 38/42* (2006.01)
*C22C 38/58* (2006.01)

(52) Cooperative Patent Classification (CPC):
**B21C 1/22; B21C 37/0811; B21C 37/0818;
B21C 37/0826; B23K 9/0253; B23K 11/0073;
B23K 11/062; B23K 13/025; C21D 1/26;
C21D 1/76; C21D 6/004; C21D 8/105; C21D 9/08;
F25B 15/06; F25B 37/00;** (Cont.)

(86) International application number:
**PCT/KR2018/000569**

(87) International publication number:
**WO 2018/236020 (27.12.2018 Gazette 2018/52)**

(54) **ABSORPTION CHILLER**

ABSORPTIONSKÜHLER

REFROIDISSEUR À ABSORPTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2017 KR 20170078172**

(43) Date of publication of application:
**29.04.2020 Bulletin 2020/18**

(73) Proprietor: **LG Electronics Inc.
Seoul 07336 (KR)**

(72) Inventor: **HONG, Seokpyo
Seoul 08592 (KR)**

(74) Representative: **Vossius & Partner
Patentanwälte Rechtsanwälte mbB
Siebertstrasse 3
81675 München (DE)**

(56) References cited:
WO-A1-2009/098962   JP-A- H10 176 893
KR-A- 20100 113 546   KR-A- 20110 105 306
KR-A- 20150 007 131   KR-A- 20150 007 131
KR-A- 20160 067 526   KR-A- 20160 067 526

(52) Cooperative Patent Classification (CPC): (Cont.)
**F25B 39/02; F25B 41/00;** B21D 53/06;
C21D 2211/001; C21D 2211/005; C22C 38/42;
C22C 38/58

**Description**

<u>TECHNICAL FIELD</u>

The present invention relates to an absorption chiller.

<u>BACKGROUND ART</u>

In general, chillers (systems) supply cold water into demand sources. In such a chiller, a refrigerant circulated into a refrigeration system and cold water circulated between a demand source and the refrigeration system are heat-exchanged with each other to cool the cold water. The chiller may be high-capacity equipment and thus be installed in large-scale buildings.

The chiller (system) may be classified into a turbo chiller that mechanically compresses a refrigerant by using a compressor and cools or heats the compressed refrigerant and an absorption chiller provided with an absorber without the compressor and allowing a refrigerant (water) to be absorbed into an absorption solution (for example, lithium bromide aqueous solution) in the absorber to perform cooling or heating.

Also, the absorption chiller may be classified into an absorption refrigerating machine and an absorption cold and hot water dispenser according to a heat source type. In the absorption refrigerating machine, an absorption cycle operates using steam and hot water as a heat source to generate cold water. And, the absorption refrigerating machine is exclusively used for cooling. The absorption cold and hot water dispenser operates using fossil fuel to generate cold water. That is, the absorption cold and hot water dispenser is a device that is capable of performing the cooling or heating by using the combustion of the fossil fuel during heating.

In particular, in the case of the absorption cold and hot water dispenser, since a refrigerant is evaporated into a gas refrigerant while being heat-exchanged with the cold water in a heat exchanger, the cooling operation may be performed. On the contrary, a gas refrigerant may be heat-exchanged with the hot water and then condensed to perform the heating operation.

In the absorption chiller, a heat transfer pipe for heat exchange between a first fluid passing through a pipe and an external second fluid is installed in a condenser, an evaporator, a regenerator, and the like. That is, the heat transfer pipe means a heat transfer tube that transfers heat between the fluids flowing through the inside and outside of the pipe. Here, the heat transfer tube may have the shape of a straight tube or a curved tube. Thus, the heat transfer pipe installed in the absorption chiller may be made of a material that is capable of securing high heat transfer performance and high corrosion resistance and abrasion resistance.

A copper (Cu) pipe having excellent heat transfer performance may be used as the heat transfer pipe of the absorption chiller according to the related art. However, the copper pipe has the following problems.

First, when the copper pipe is used in a total heat exchanger in which water is used as a refrigerant, scales are accumulated on an inner circumferential surface of the pipe which deteriorates reliability of the pipe. That is, since corrosion occurs easily when the scales are accumulated on the inner circumferential surface of the copper pipe, it is necessary to perform a cleaning process for cleaning the inner circumferential surface of the pipe or a pipe replacement process.

Second, the copper pipe used in the absorption chiller is installed to be connected to a baffle. Here, there is a problem that wear occurs on an outer surface of the copper pipe that contacts the baffle to easily cause corrosion and breakage.

Third, since the copper pipe has a small stress margin value for withstanding a pressure in the pipe, it is vulnerable to vibration transmitted from the compressor. Also, noise may be greatly generated due to the vibration.

Fourth, copper prices in the market are relatively high, and price fluctuations are severe. Thus, costly difficulties arise in the manufacture and use of copper pipes.

In recent years, to solve these problems, a new method for replacing the copper pipe with a stainless steel pipe is emerging.

Information on the relating prior art document is as follows.

1. Publication number: KR 10-2016-0067526 (Publication Date: June 14, 2016)

Title of The Invention: Stainless Corrugate Tube, Absorption Refrigerating Machine Having The Same And Manufacturing Method Of The Same

The stainless steel pipe is made of a stainless steel material, has strong corrosion resistance when compared to the copper pipe, and is less expensive than the copper pipe. Also, since the stainless steel pipe has strength and hardness greater than those of the copper pipe, vibration and noise absorption capacity may be superior to those of the copper pipe.

Also, since the stainless steel pipe has pressure resistance characteristics superior to that of the copper pipe, there is no risk of damage even at the high pressure.

The heat transfer pipe disclosed in the foregoing prior art document is a stainless steel pipe made of STS 400 series, in particular, STS 430 J1L material. The STS 430 J1L material has chemical properties of a material that contains 0.025% or less of carbon (C), 1.00% or less of silicon (Si) and manganese (Mn), 0.4% or less of nickel (Ni), 16.00% to 19.00% of manganese (Mn), 0.3% to 0.8% of copper (Cu), and the like.

The general stainless steel pipe of the STS 400 series having the above-described chemical properties according to the related art has a yield strength of about 300 MPa to about 320 MPa, a Vickers hardness of about 151 Hv to about 155 Hv, and an elongation of 29% to about 30%, which are relatively higher than those of the copper pipe. As a result, pipe expansion and pipe bending for pipe connection are difficult.

In detail, an end of the heat transfer pipe used for the absorption chiller is expanded to be connected to the other pipe. Here, the worker uses a roll expansion method to form the expansion pipe.

The roll expansion method is a method in which a mandrel is closely attached to an inner circumferential surface of the pipe, and then a roll rotates to expand the pipe. Thus, the general stainless steel pipe according to the related art has a problem that the installation thereof is difficult because the above-described pipe expansion process is very difficult when compared to the copper pipe according to the related art due to the high strength and hardness.

Also, due to the above-described physical properties of the stainless steel pipe according to the related art, design freedom may be deteriorated because it is difficult to form the heat transfer pipe using the stainless steel pipe according to the related art in the curved shape. For example, in the case of using the stainless steel pipe as the heat transfer pipe according to the related art, the heat transfer pipe may be disposed in a straight line, and thus, the heat transfer pipe has a relatively short length and a relatively reduced heat-exchange area when compared to the pipe having a shape that is bent several times. Furthermore, since the stainless steel pipe according to the related art is deteriorated in heat transfer performance when compared to the copper pipe, the heat exchange performance of the stainless steel pipe may be more deteriorated.

## DISCLOSURE OF THE INVENTION

## TECHNICAL PROBLEM

To solve the above problems, the present invention is to provide an absorption chiller including a heat transfer pipe having improved workability and design freedom by securing ductility that is equal or similar to that of a copper pipe.

Also, the present invention is to provide an absorption chiller including a heat transfer pipe having strength and hardness that are equal to or higher than those of a copper pipe.

Also, the present invention is to provide an absorption chiller that is capable of preventing a heat transfer pipe from being corroded by an inner pressure condition of the heat transfer pipe or an external environmental condition of the heat transfer pipe.

Also, the present invention is to provide an absorption chiller including a heat transfer pipe that is capable of maintaining a critical pressure above a predetermined level even if the pipe is reduced in thickness.

Also, the present invention is to provide an absorption chiller including a heat transfer pipe which increases in inner diameter to reduce a pressure loss of a fluid flowing through the inside the pipe.

Also, the present invention is to provide an absorption chiller including a heat transfer pipe having improved vibration absorption capacity.

Also, the present invention is to provide an absorption chiller having heat transfer performance that is equal to or greater than that of an absorption chiller having a copper pipe by relatively reducing a thickness of the pipe of the absorption chiller.

## TECHNICAL SOLUTION

To solve the above problems, an absorption chiller is provided which is defined in the appended claims.

## ADVANTAGEOUS EFFECTS

The air conditioner of the present invention may have the following effects.

First, the austenite stainless steel pipe may be applied to secure the ductility of the pipe at the level of the copper pipe according to the related art. Therefore, the heat transfer pipe may be processed (bent) and be easily installed in the limited space. Also, the heat transfer pipe may be designed to be bent so as to increase in heat transfer area in the limited space (the heat transfer pipe increases in total length). That is, when compared to the stainless steel pipe according to the related art, the molding freedom and design freedom of the heat transfer pipe may increase.

Second, since the ductile stainless steel pipe according to this embodiment has the strength and the hardness greater than those of the copper pipe while having the ductility at the level of the copper pipe, the pressure resistance may be remarkably superior to that of the copper pipe. Also, since the stainless steel pipe having the strength and the hardness greater than those of the copper pipe has a stress margin greater than that of the copper pipe, the vibration absorption capability may be remarkably superior to that of the copper pipe.

Third, since the ductility of the ductile stainless steel pipe according to this embodiment is improved, the workability of the pipe may increase. Thus, the expansion of the heat transfer pipe may be easy. Therefore, the convenience in installation of the heat transfer pipe may be improved.

Fourth, since the ductile stainless steel pipe has the excellent wear resistance and corrosion resistance when compared to the copper pipe, there may be an advantage of preventing the damage due to the corrosion. That is, the lifespan of the heat transfer pipe may increase.

Fifth, the relatively inexpensive ductile stainless steel pipe may be used without using the expensive copper pipe.

Sixth, since the heat transfer pipe made of the ductile stainless has the strength greater than that of the copper pipe while securing the ductility at the level of the copper pipe, the heat transfer pipe may be reduced in thickness. Therefore, since the heat transfer rate increases as the thickness of the heat transfer pipe increases, the heat transfer performance of the heat transfer pipe made of the ductile stainless steel pipe may be improved to be equal to or more than the heat transfer performance of the copper pipe. In addition, the chiller efficiency may be improved.

## BRIEF DESCRIPTION OF THE DRAWINGS

FIG. 1 is a drawing illustrating a configuration of an absorption chiller and a refrigerant cycle according to a first embodiment of the present invention.

FIG. 2 is a drawing illustrating an evaporator of the absorption chiller according to the first embodiment of the present invention.

FIG. 3 is a drawing illustrating an absorber of the absorption chiller according to the first embodiment of the present invention.

FIG. 4 is a drawing illustrating a shape of a heat transfer pipe of the absorption chiller according to the first embodiment of the present invention.

FIG. 5 is a cross-sectional view of the heat transfer pipe of FIG. 4.

FIG. 6 is a flowchart illustrating a method for manufacturing the shape of the heat transfer pipe made of a ductile stainless steel in FIG. 4.

FIG. 7 is a process diagram illustrating a process of manufacturing a heat transfer pipe manufactured by the manufacturing method of FIG. 6.

FIG. 8 is a microstructure photograph of a stainless steel having an austenite matrix structure of about 99% and a delta ferrite structure of about 1% or less.

FIG. 9 is a microstructure photograph of a stainless steel having only the austenite matrix structure.

FIG. 10 is a drawing illustrating an outer diameter and an inner diameter of the heat transfer pipe according to the first embodiment of the present invention.

FIG. 11 is a flowchart illustrating a method for manufacturing the ductile stainless steel pipe according to the first embodiment of the present invention.

FIG. 12 is a schematic drawing of a cold rolling process of FIG. 11.

FIG. 13 is a schematic drawing of a slitting process of FIG. 11.

FIG. 14 is a schematic drawing of a forming process of FIG. 11.

FIGS. 15 to 18 are cross-sectional views illustrating a process of manufacturing a ductile stainless steel pipe according to the manufacturing method of FIG. 11.

FIG. 19 is a schematic drawing of a bright annealing process of FIG. 11.

FIG. 20 is a graph illustrating result values obtained through an S-N curve test for comparing fatigue limits of the ductile stainless steel pipe according to the first embodiment of the present invention and a copper pipe according to the related art.

FIG. 21 is a graph illustrating an S-N curve test of the ductile stainless steel pipe according to the first embodiment of the present invention.

FIG. 22 is a view illustrating a plurality of ductile stainless steel pipes, aluminum (Al) pipes, and copper pipes, which are objects to be tested for corrosion resistance.

FIG. 23 is a table illustrating results obtained by measuring a corrosion depth for each pipe in FIG. 22.

FIG. 24 is a graph illustrating results of FIG. 23.

FIG. 25 is drawing illustrating a shape in which the ductile stainless steel pipe is bent according to the present invention.

FIG. 26 is a cross-sectional view illustrating a portion of the bent pipe.

FIG. 27 is a graph illustrating results obtained through a test for comparing bending loads according to deformation lengths of the ductile stainless steel pipe, the copper pipe, and the aluminum pipe.

FIG. 28 is a drawing illustrating a configuration of an absorption chiller and a refrigerant cycle which is not claimed.

## MODE FOR CARRYING OUT THE INVENTION

Hereinafter, some embodiments of the present invention will be described in detail with reference to the accompanying drawings. Exemplary embodiments of the present invention will be described below in more detail with reference to the accompanying drawings. It is noted that the same or similar components in the drawings are designated by the same reference numerals as far as possible even if they are shown in different drawings. In the following description of the present invention, a detailed description of known functions and configurations incorporated herein will be omitted to avoid making the subject matter of the present invention unclear.

In the description of the elements of the present invention, the terms first, second, A, B, (a), and (b) may be used. Each of the terms is merely used to distinguish the corresponding component from other components, and does not delimit an essence, an order or a sequence of the corresponding component. It should be understood that when one component is "connected", "coupled" or "joined" to another component, the former may be directly connected or jointed to the latter or may be "connected", coupled or "joined" to the latter with a third component interposed therebetween.

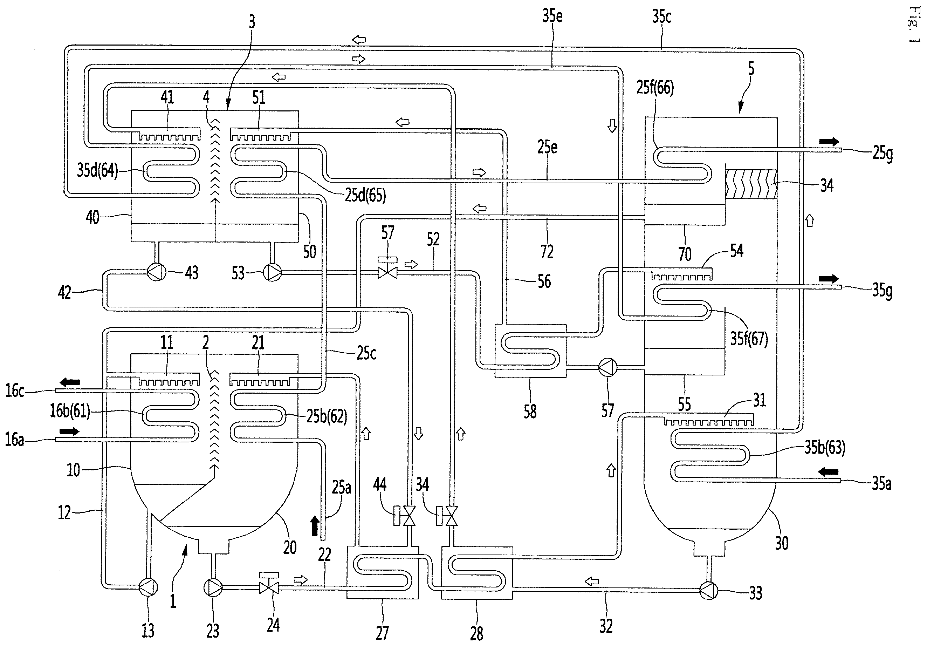

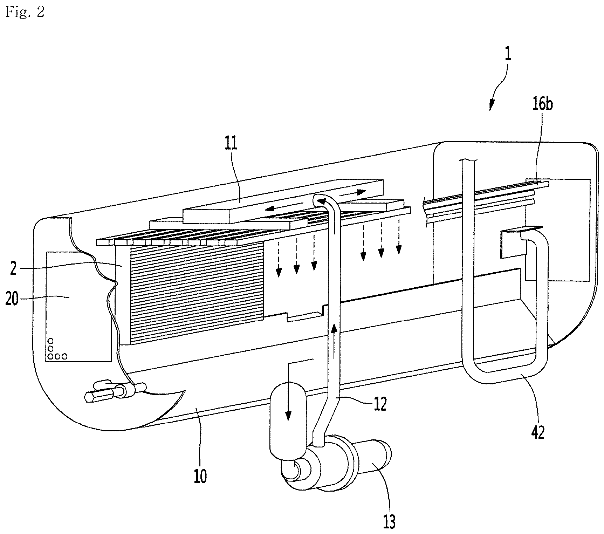

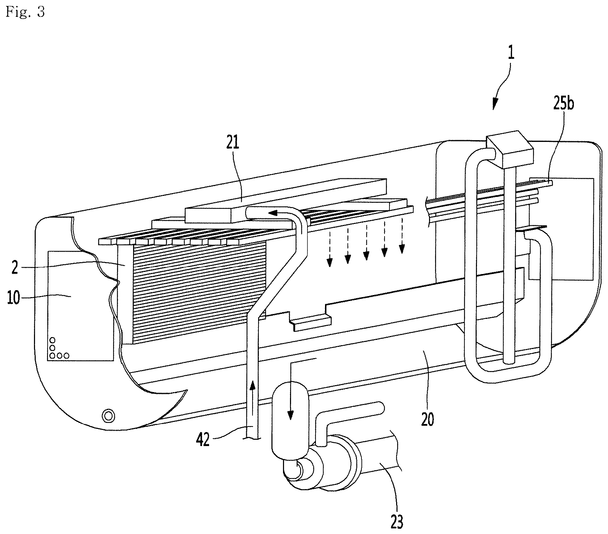

FIG. 1 is a drawing illustrating a configuration of an absorption chiller and a refrigerant cycle according to a first embodiment of the present invention, FIG. 2 is a drawing illustrating an evaporator of the absorption chiller according to the first embodiment of the present invention, and FIG. 3 is a drawing illustrating an absorber of the absorption chiller according to the first embodiment of the present invention.

Hereinafter, an absorption chiller according to the first embodiment of the present invention will be described in detail with reference to FIGS. 1 to 3. The absorption chiller is classified into a single use absorption chiller or a double use absorption chiller according to the number of regenerators. The absorption chiller according to the first embodiment of the present invention will be described based on the double use absorption chiller. However, the scope of the present invention is not limited to the dual use absorption chiller. That is, one of ordinary skill in the art of absorption chiller technologies will be able to make various modifications and variations without departing from the essential characteristics of the present invention as defined in the appended claims.

<Configuration of absorption chiller>

Referring to FIGS. 1 to 3, an absorption chiller according to the first embodiment of the present invention may include an evaporator 10, an absorber 20, a first regenerator 30, a second regenerator 40, and a condenser 70. Also, the absorption chiller according to the first embodiment of the present invention may further include an auxiliary absorber 50 and an auxiliary regenerator 55.

A refrigerant used in the absorption refrigerating machine according to the first embodiment of the present invention may include distilled water (water), and a absorption solution may include a lithium bromide (LiBr) solution. Also, the lithium bromide solution may be largely separated into a weak solution, an intermediate solution, and a strong solution depending on a concentration thereof.

[First shell]

In the absorption chiller, the evaporator 10 and the absorber 20 may be provided in a first shell 1 that is one shell so that the refrigerant evaporated in the evaporator 10 flows easily into the absorber 20. A sidewall partitioning the inside of the first shell 1 into an evaporation region in which the refrigerant is evaporated and an absorption region in which the refrigerant is absorbed in the strong solution and a first eliminator 2 disposed above the side wall to guide a gas refrigerant in the evaporation region so as to allow the gas refrigerant to move into the absorption region may be disposed inside the first shell 1.

[Evaporator]

The evaporator 10 may further include a refrigerant sprayer 11 for spraying the refrigerant into the evaporation region. In the evaporator 10, the refrigerant sprayed by the refrigerant sprayer 11 and a cold water line 16 to be described later may be heat-exchanged with each other to generate cold water required for cooling.

Here, the cold water line 16 inside the evaporator 10, which is heat-exchanged with the refrigerant sprayed from the refrigerant sprayer 11 is referred to as a first heat transfer pipe 61.

When the cold water flows through the cold water line 16, the refrigerant sprayed from the refrigerant sprayer 11 may be heat-exchanged with the cold water of the cold water line 16. The gas refrigerant remaining in an inner space of the evaporator may pass through the first eliminator 3 to move to the absorption region of the absorber 20. For example, a temperature of the cold water at an inlet of the cold water line 16 is about 13 degrees Celsius, and a temperature of the cold water at an outlet of the cold water line 16 is about 8 degrees Celsius by the heat exchange with the refrigerant sprayed by the refrigerant sprayer 11.

The evaporator 10 may further include a pumping passage 12 for guiding the liquid refrigerant dropping to a lower portion of the evaporation region to the refrigerant sprayer 11 and a refrigerant pump 13 installed in the pumping passage 12.

The liquid refrigerant may flow to the pumping passage 12 due to the operation of the refrigerant pump 13 to flow to the refrigerant sprayer 11.

Here, the liquid refrigerant may be a condensed refrigerant flowing into the evaporator 10 through the refrigerant passage 72 from the condenser 70 to be described later. The refrigerant passage 72 may be connected to the pumping passage 12 to introduce the condensed refrigerant into the evaporator 10 or may be independently connected to the evaporator 10 separately from the pumping passage 12 to introduce the condensed refrigerant.

[Absorber]

The absorber 20 is configured to absorb the gas refrigerant evaporated in the evaporator 10 into the absorption solution and may include a strong solution sprayer 21 for spraying the absorption solution (strong solution) to the absorption region.

The gas refrigerant moving from the evaporation region to the absorption region may be absorbed by the absorption solution (strong solution) sprayed from the strong solution sprayer 21. The absorption solution (lithium bromide solution) has high hydrophilicity with respect to water and has a property of absorbing water vapor. Accordingly, the absorption solution may absorb the gas refrigerant (water vapor) in the vicinity thereof to generate an absorption solution having a light concentration. That is, the absorption solution may absorb the gas refrigerant so as to be changed from the strong solution into the weak solution.

Also, a cooling water line 25 to be described later, which is heat-exchanged with the absorption solution, may be disposed in the absorber 20. For example, the cooling water flowing through the cooling water line 25 may have a temperature of about 30 degrees Celsius. Also, the absorption solution may have a temperature of about 40 degrees Celsius. Thus, the cooling water line 25 may serve to absorb heat generated in the process of absorbing the gas refrigerant through the heat exchange.

Here, the cooling water line 25b inside the absorber which is heat-exchanged with the strong solution sprayed from the strong solution sprayer 21 and the gas refrigerant is called a second heat transfer pipe 62.

[First regenerator]

The first regenerator 30 is configured to receive the weak solution obtained by absorbing the gas refrigerant from the absorber 20 to primarily regenerate the weak solution, thereby generating the intermediate solution.

The first regenerator 30 may heat the weak solution supplied from the absorber 20 in a heating space to separate the refrigerant mixed with the weak solution so as to generate the gas refrigerant, thereby change the weak solution into the intermediate solution.

The hot water line 25 described later is disposed in the heating space, and the weak solution may be heated by the heat-exchange with hot water or steam flowing through the hot water line 25. As a result, the liquid refrigerant contained in the weak solution may be separated to generate the gas refrigerant, and the absorption solution may be changed into the intermediate solution. For example, the hot water flowing through the hot water line 25 has a temperature of about 95 degrees Celsius, and the absorption solution discharged from a high-temperature heat exchanger 28, which will be described below, that flows into the weak solution sprayer 31 has a temperature of about 69 degrees Celsius.

The first regenerator 30 may further include a weak solution sprayer 31 for spraying the absorption solution (weak solution) into the heating space. The absorption solution sprayed by the weak solution sprayer 31 may be understood as a weak solution supplied from the absorber 20.

Here, the hot water line 35b inside the first regenerator 30, which is heat-exchanged with the weak solution sprayed from the weak solution sprayer 31 is called a third heat transfer pipe 63.

[Third shell]

In the absorption chiller, the first regenerator 30, the condenser 70, and the auxiliary regenerator 55 may be provided in the third shell 5 that is one shell so that the gas refrigerant separated in the first regenerator 30 flows easily to the condenser 70.

A third eliminator 34 may be disposed in the third shell 5 to guide the gas refrigerant separated from the heated weak solution to the condenser 70.

Also, the hot water line 35 may be disposed in the third shell 5 so that the hot water line 35 is heat-exchanged with the absorption solution in the first regenerator 30 and the auxiliary regenerator 55. This will be described later in detail.

[Second regenerator]

The second regenerator 40 is configured to receive the primarily regenerated absorption solution (intermediate solution) from the first regenerator 30 to secondarily regenerate the absorption solution, thereby generating the strong solution. In the second regenerator 40, the intermediate solution supplied from the first regenerator 30 may be heat-exchanged with the hot water or steam that is heat-exchanged in the first regenerator 30 to separate the refrigerant mixed with the intermediate solution, thereby changing the intermediate into the strong solution.

The second regenerator 40 may include an intermediate solution sprayer 41 for spraying the absorption solution (intermediate solution) supplied from the first regenerator 30. In detail, the absorption solution (intermediate solution) sprayed from the intermediate solution sprayer 41 is heated by the hot water or steam of the hot water line 35 passing through the first regenerator 30 and extends to the second regenerator 40. For example, the hot water of the hot water line 35 has a temperature of about 72 degrees Celsius, and the absorption solution sprayed from the intermediate solution sprayer 41 has a temperature of about 60 degrees Celsius. Thus, the liquid refrigerant contained in the absorption solution is separated into the gas refrigerant, and the absorption solution is changed into the strong solution. In addition, the separated gas refrigerant flows to the auxiliary absorber 50, and the strong solution flows and circulates again to the strong solution sprayer 21 of the absorber 20.

Here, the hot water line 35d inside the second regenerator 40, which is heat-exchanged with the intermediate solution sprayed from the intermediate solution sprayer 41, is called a fourth heat transfer pipe 64.

[Second shell]

In the absorption chiller, the second regenerator 40 and the auxiliary absorber 50 may be provided in the second shell 3 that is one shell so that the gas refrigerant separated by the secondary regeneration in the second regenerator 40 easily flows to the auxiliary absorber 50.

Also, a sidewall partitioning the inside of the second shell 3 into a regeneration region of the second regenerator 40 in which the intermediate solution is secondarily regenerated into the strong solution, an absorption region of an auxiliary absorber 50 in which the gas refrigerant is absorbed into the strong solution of the auxiliary absorber 50, and a second eliminator 4 disposed above the sidewall to guide the gas refrigerant generated in the regeneration region to move to the absorption region.

[Auxiliary absorber]

In the absorption chiller, apart from a main cycle of the absorption solution circulating through the absorber 20 and the first and second regenerators 30 and 40, an auxiliary cycle of the auxiliary absorption solution circulating through the auxiliary absorber 50 and the auxiliary regenerator 55 may be provided.

The auxiliary absorber 50 may include an auxiliary strong solution sprayer 51 for spraying an auxiliary absorption solution (auxiliary strong solution) into the absorption region of the auxiliary absorber 50.

The auxiliary strong solution sprayed from the auxiliary strong solution sprayer 51 may absorb the gas refrigerant flowing through the second eliminator 4 from the second regenerator 40 as described above and thus be changed into the weak solution (auxiliary weak solution).

Also, the cooling water line 25 that is heat-exchanged with the auxiliary strong solution may be disposed in the auxiliary absorber 50. Here, the cooling water line 25 may be understood as a cooling water line 25 that is heat-exchanged in the absorber 20 and extends to the auxiliary absorber 50. For example, the cooling water flowing through the cooling water line 25 may have a temperature of about 34 degrees Celsius, and the auxiliary absorption solution may have a temperature of about 42 degrees Celsius. Therefore, the heat generated in the process of absorbing the gas refrigerant flowing from the second regenerator 40 may be absorbed by the cooling water line 25 through the heat exchange.

The auxiliary absorption solution (weak solution) that absorbs the gas refrigerant introduced from the second regenerator 40 and thus is changed into the weak solution may be introduced into the auxiliary regenerator 55.

Here, the cooling water line 25d inside the auxiliary absorber 50 for the heat exchange is referred to as a fifth heat transfer pipe 65.

[Condenser]

The condenser 50 provides a space in which the gas refrigerant separated in the process of generating the intermediate solution in the first regenerator 30 is introduced through the third eliminator 34. As a result, the gas refrigerant may be heat-exchanged with the cooling water line 25 that will be described later and then condensed. Here, the cooling water line 25 may be understood as the cooling water line that is heat-exchanged in the above-described auxiliary absorber 50 and extends to the condenser 70. For example, a temperature of the cooling water flowing through the cooling water line 25 is about 35 degrees Celsius. Also, a temperature of the liquid refrigerant condensed by the heat exchange between the gas refrigerant and the cooling water line 25 is about 39 degrees Celsius.

The condenser 50 may include a refrigerant passage 72 for allowing the condensed refrigerant to flow to the evaporator 10. Therefore, the liquid refrigerant is introduced into the evaporator 10 by the refrigerant passage 72 and then is sprayed through the refrigerant sprayer 11 to circulate.

Here, the cooling water line 25f inside the condenser 70, which is heat-exchanged with the gas refrigerant generated from the first regenerator 30 is referred to as a sixth heat transfer pipe 66.

[Auxiliary regenerator]

The auxiliary regenerator 55 is configured to receive the auxiliary weak solution absorbing the gas refrigerant from the auxiliary absorber 50 to regenerate the auxiliary weak solution, thereby generating the auxiliary strong solution.

The auxiliary regenerator 55 may heat the auxiliary weak solution supplied from the auxiliary absorber 50 through the heat exchange with the hot water line 35 to be described later to separate the refrigerant mixed with the weak solution to generate the gas refrigerant, thereby changing the auxiliary weak solution into the auxiliary strong solution.

In detail, the hot water line 25 that will be described later may be disposed in the auxiliary regenerator 55, and the auxiliary weak solution may be heat-exchanged with the hot water or steam flowing through the hot water line 25 and then be heated. For example, the hot water flowing through the hot water line 25 has a temperature of about 64 degrees Celsius, and the auxiliary absorption solution discharged from the auxiliary heat exchanger 28 that will be described below and then introduced into the auxiliary weak solution sprayer 31 has a temperature of about 50 degrees Celsius. As a result, the liquid refrigerant contained in the weak solution may be separated into the gas refrigerant, and the auxiliary absorption solution may be changed into the strong solution. Also, the gas refrigerant separated from the auxiliary solution may be introduced into the condenser 70 through the third eliminator 34.

The auxiliary regenerator 55 may further include an auxiliary weak solution sprayer 54 for spraying an auxiliary absorption solution (auxiliary weak solution) to the heating space. The auxiliary absorption solution sprayed by the auxiliary weak solution sprayer 54 may be understood as an auxiliary solution supplied from the auxiliary absorber 50.

Also, the hot water line 25 inside the auxiliary regenerator 55 may be understood as the hot water line 25 which is heat-exchanged from the second regenerator 40 and extends to the auxiliary regenerator 55.

Here, a hot water line 35f within the auxiliary regenerator 55, which is heat-exchanged with the auxiliary weak solution sprayed from the auxiliary weak solution sprayer 54, is referred to as a seventh heat transfer pipe 67.

[Cold water line]

The absorption chiller according to the first embodiment of the present invention may further include a cold water line 16.

The cold water line 16 is a line through which cold water flows in the absorption chiller. In detail, the cold water line 16 may include a first cold water line 16a through which the cold water is introduced from the outside, a second cold water line 16b extending together with an outlet-side of the cold water line 16a and disposed inside the evaporator 10 so as to be heat-exchanged with the refrigerant, and a third cold water line 16c extending together with an outlet-side of the second cold water line 16b to discharge cold water, which is heat-exchanged, to the outside.

The cold water may be a waste heat source supplied from a waste heat supply source such as a sewer, and the waste heat of the waste heat source may be recovered as a refrigerant in the cold water line of the evaporator 10. For example, the cold water may have a temperature of about 13 degrees Celsius in the first cold water line 16a and may be cooled to a temperature of about 8 degrees Celsius in the third cold water line 16c after the heat exchange.

[Weak solution, intermediate solution, strong solution lines]

The absorption chiller according to the first embodiment of the present invention may further include a weak solution line 22, an intermediate solution line 32 and a strong solution line 42.

The weak solution line 22 may extend from the absorber 20 to the first regenerator 30 to guide the weak solution in the absorber 20 to flow to the first regenerator 30.

The intermediate solution line 32 extends from the first regenerator 30 to the second regenerator 40 so that the intermediate solution that is primarily regenerated from the first regenerator 30 flows to the second regenerator 40.

The strong solution line 42 may extend from the second regenerator 40 to the absorber 20 to guide the strong solution inside the second regenerator 40 to the absorber 20.

[Weak solution pump, intermediate solution pump, strong solution pump]

The weak solution line 22 may include a weak solution pump 23 and a first valve 24, which adjust an amount of weak solution flowing from the absorber 20 to the first regenerator 30.

The intermediate solution line 32 may include an intermediate solution pump 33 and a second valve 34 for adjusting the amount of the intermediate solution introduced from the first regenerator 30 to the second regenerator.

The strong solution line 42 may include a strong solution pump 43 and a third valve 44, which adjust an amount of strong solution introduced into the absorber 20 from the second regenerator 40.

[Secondary weak solution line, auxiliary weak solution pump, auxiliary strong solution line, auxiliary strong solution pump]

The absorption chiller according to the first embodiment of the present invention may further include an auxiliary weak solution line 52, an auxiliary strong solution line 56, and an auxiliary heat exchanger 58.

The auxiliary weak solution line 52 may extend from the auxiliary absorber 50 to the auxiliary regenerator 55 to guide the auxiliary weak solution inside the auxiliary absorber 50 to flow to the auxiliary regenerator 55.

The auxiliary strong solution line 56 may extend from the auxiliary regenerator 55 to the auxiliary absorber 50 to guide the strong solution within the auxiliary regenerator 55 to the auxiliary absorber 50.

The auxiliary heat exchanger 52 is a part that is disposed in the auxiliary weak solution line 52 to allow the auxiliary strong solution line 56 to pass therethrough so that the weak solution flowing through the auxiliary weak solution line 52 and the strong solution flowing through the auxiliary strong solution line 56 are heat-exchanged with each other. For example, the auxiliary heat exchanger 52 may include a plate heat exchanger.

[Cooling water line]

The absorption chiller according to the first embodiment of the present invention may further include a cooling water line 25 as described above.

The cooling water line 25 may include a first cooling water line 25a guiding the cooling water to be introduced into the absorber 20 from the outside, a second cooling water line 25b connected to the first cooling water line 25a and disposed inside the absorber 20 to absorb heat that is generated when the strong solution introduced into the absorber 20 absorbs the gas refrigerant, a third cooling water line 25c extending from the second cooling water line 25b to the auxiliary absorber 50, a fourth cooling water line 25d connected to the third cooling water line 25c and disposed inside the auxiliary absorber 50 so as to be heat-exchanged with the gas refrigerant within the auxiliary absorber 50, a fifth cooling water line 25e extending from the fourth cooling water line 25d to the condenser 70, a sixth cooling water line connected to the fifth cooling water line 25e and disposed within the condenser 70 so as to be heat-exchanged with the gas refrigerant within the condenser 70, and a seventh cooling water line 25g connected to the sixth cooling water line 25f to discharge the heat-exchanged cooling water to the outside.

[Hot water line]

The absorption chiller according to the first embodiment of the present invention may further include a hot water line 35 as described above.

The hot water line 35 is configured to heat the absorption solution in the first regenerator 30, the second regenerator 40, and the auxiliary regenerator 55 and uses the hot water or steam as a heat source.

The hot water line 35 may include a first hot water line 35a guiding the hot water or steam to be introduced into the first regenerator 30 from the outside, a second hot water line 35b connected to the first hot water line 35a and disposed within the first regenerator 30 to separate the gas refrigerant through heat exchange with the strong solution introduced into the first regenerator 30, a third hot water line 35c extending from the second hot water line 35b to the second regenerator 40, a fourth hot water line 35d connected to the third hot water line 35c and disposed within the second regenerator 40 to separate the gas refrigerant through heat exchange with the intermediate solution sprayed from the intermediate solution sprayer 41, a fifth hot water line 35e extending from the fourth hot water line 35d to the auxiliary regenerator 55, a sixth hot water line 35f disposed within the auxiliary generator 55 to separate the gas refrigerant through heat exchange with the auxiliary weak solution sprayed into the auxiliary regenerator 55, and a seventh hot water line 35g connected to the sixth hot water line 35f to discharge the hot water or steam to the outside.

[Low-temperature heat exchanger, high-temperature heat exchanger]

The absorption chiller according to the first embodiment of the present invention may further include a low-temperature heat exchanger 27 and a high-temperature heat exchanger 28.

The low-temperature heat exchanger 27 is a part that is disposed in the weak solution line 22 to allow the strong solution line 42 to pass therethrough so that the weak solution flowing through the weak solution line 22 and the strong solution flowing through the strong solution line are heat-exchanged with each other.

The high-temperature heat exchanger 28 is a part that is disposed in the intermediate solution line 32 to allow the weak solution line 22 to pass therethrough so that the weak solution, which is heat-exchanged from the low-temperature heat exchanger and flows through the weak solution line, and the intermediate solution flowing through the intermediate solution line 32 are heat-exchanged with each other.

[Main cycle]

Hereinafter, a cooling operation of the absorption chiller according to the first embodiment of the present invention will be described. First, the main cycle will be described.

When the cold water flows into the first cold water line 16a and the cold water flows into the second cold water line 16b, the liquid refrigerant is sprayed from the refrigerant sprayer 11 disposed in the evaporator 10.

Since the liquid refrigerant sprayed from the refrigerant sprayer 11 and the cold water flowing through the second cold water line 16b are heat-exchanged with each other, the cold water is cooled and discharged through the third cold water pipe 16c, and the liquid refrigerant is evaporated to be changed into the gas refrigerant. The evaporated gas refrigerant moves to the absorber 20 through the first eliminator 2.

When the gas refrigerant is introduced into the absorber 20, the strong solution absorbs the gas refrigerant so as to be changed into the weak solution while the strong solution is sprayed from the absorber sprayer 21 of the absorber 20.

Also, the heat generated in the process of absorbing the gas refrigerant may be absorbed by the cooling water flowing in the second cooling water line 25b.

The weak solution absorbed by the gas refrigerant in the absorber 20 may be introduced into the first regenerator 30 through the low-temperature heat exchanger 27 and the high-temperature heat exchanger 28 through the weak solution line 22.

In the first regenerator 30, the weak solution may be heated and changed into the strong solution by hot water or steam flowing through the second hot water line 35b, and the gas refrigerant separated from the weak solution may flow to the condenser 70.

The intermediate solution of the first regenerator 30 may flow into the intermediate solution line 32 to flow into the second regenerator 40 via the high-temperature heat exchanger 28.

In the second regenerator 40, the heat exchange between the introduced intermediate solution and the hot water or steam flowing through the fourth hot water line 35d may occur. In the second regenerator 40, the intermediate solution may be secondarily regenerated to be changed into the strong solution, and the separated gas refrigerant may be introduced into the auxiliary absorber 50.

That is, the gas refrigerant generated during the secondary regeneration of the intermediate solution may be introduced into the auxiliary absorber 50 through the second eliminator 4.

Also, the gas refrigerant generated in the first regenerator 30 may be introduced into the condenser 70 through the third eliminator 34.

Also, the strong solution changed in the second regenerator 40 may be introduced into the strong solution sprayer 21 of the absorber 20 via the low-temperature heat exchanger 27 through the strong solution line 42.

The gas refrigerant introduced from the first regenerator 10 and the gas refrigerant introduced from the auxiliary regenerator 55, which is introduced through the third eliminator 6, may be condensed in the condenser 70. The gas refrigerant introduced into the condenser 50 and the cooling water flowing through the sixth cooling water line 25f disposed inside the condenser 50 are heat-exchanged with each other so that the gas refrigerant is condensed into the liquid refrigerant, and the cooling water is discharged to the outside through the cooling water line 25g.

Also, the liquid refrigerant condensed in the condenser 50 may be introduced into the evaporator 10 through the refrigerant passage 72.

[Auxiliary cycle]

Hereinafter, the auxiliary cycle will be described.

As described in the main cycle, the gas refrigerant separated from the second regenerator 40 is introduced into the auxiliary absorber 50 through the second eliminator 4, and the auxiliary strong solution sprayed into the auxiliary absorber 50 absorbs the gas refrigerant so as to be changed into the auxiliary weak solution.

Also, the heat generated while the auxiliary strong solution absorbs the gas refrigerant may be absorbed by the cooling water flowing through the fourth cooling water line 25d.

The auxiliary weak solution absorbing the gas refrigerant in the auxiliary absorber 50 is introduced into the auxiliary regenerator 55 via the auxiliary heat exchanger 58 through the auxiliary weak solution line 52.

In the auxiliary regenerator 55, the auxiliary solution is heated by the hot water or steam flowing through the sixth hot water line 35f so as to be changed into the auxiliary strong solution, and the auxiliary strong solution is supplied to the auxiliary absorber 50 through the auxiliary strong solution line 56. The gas refrigerant generated while the auxiliary solution is heated is introduced into the condenser 70 through the second eliminator 34.

[Heat transfer pipe]

As described above, the heat transfer pipes 61, 62, 63, 64, 65, 66, and 67 may be disposed in at least one of the evaporator 10, the absorbers 20 and 50, the regenerators 30, 40, and 55, or the condenser 70. In detail, the second cold water line 16b, the second cooling water line 25b, the second hot water line 35b, the fourth hot water line 35d, the fourth cooling water line 25d, and the sixth cooling water line, in which the heat exchange is performed, may correspond to the first to seventh heat transfer pipes 61, 62, 63, 64, 65, 66, and 67 of the absorption chiller.

For convenience of description, when the first to seventh heat transfer pipes 61, 62, 63, 64, 65, 66, and 67 are described in a combination, the heat transfer pipe 60 will be described as an example. However, the number of heat transfer pipes 60 is not limited to the number of heat transfer pipes disclosed in this embodiment.

Specifically, the first heat transfer pipe 61 means the second cold water line 16b, the second heat transfer pipe 62 means the second cooling water line 25b, the third heat transfer pipe 63 means the second hot water line 35b, the fourth heat transfer pipe 64 means the fourth hot water line 35d, the fifth heat transfer pipe 65 means the fourth cooling water line 25d, the sixth heat transfer pipe 66 means the sixth cooling water line 25f, and the seventh heat transfer pipe 67 means the sixth hot water line 35f.

In another aspect, the heat transfer pipe may be understood to be provided in at least one of the cold water line 16, the cooling water line 25, or the hot water line 35.

Also, the first heat transfer pipe 61 may constitute at least a portion of the cold water line 16, and the second heat transfer pipe, the fifth heat transfer pipe 65, and the sixth heat transfer pipe 66 may constitute at least a portion of the cooling water line. Similarly, the third heat transfer pipe 64, the fourth heat transfer pipe 64, and the seventh heat transfer pipe 67 may constitute at least a portion of the hot water line 35.

The ductile stainless steel pipe to be described later may be configured of at least one heat transfer pipe of the first to seventh heat transfer pipes.

[Shape of heat transfer pipe]

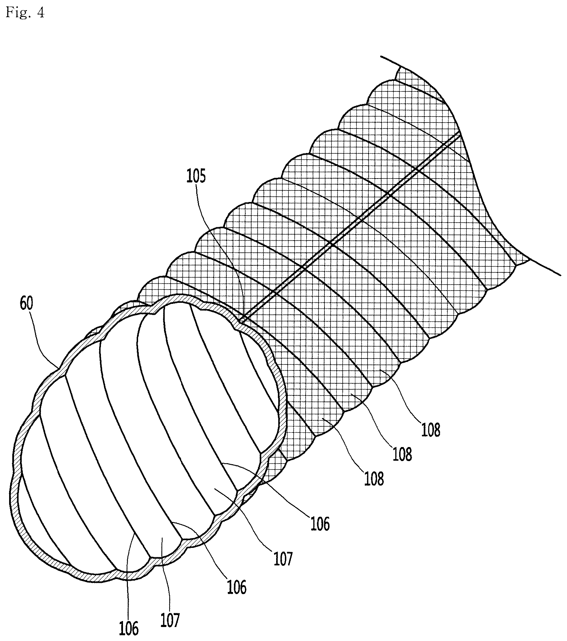

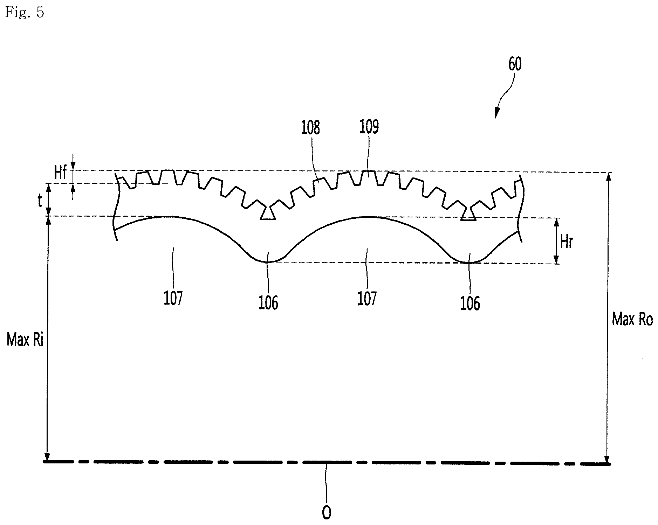

FIG. 4 is a drawing illustrating a shape of the heat transfer pipe of the absorption chiller according to the first embodiment of the present invention, and FIG. 5 is a cross-sectional view of the heat transfer pipe of FIG. 4. The heat exchanger pipe 60 of the present invention shown in FIGS. 4 and 5 is made of a ductile stainless steel which will be described later.

Referring to FIGS. 4 and 5, the heat transfer pipe 60 may include a plurality of fins 108 protruding from an outer circumferential surface. The heat transfer pipe may has a hollow shape. Also, the heat transfer pipe 60 is provided with a long welded bonding part 105 in a longitudinal direction. Since the heat transfer pipe 60 may be welded by rolling a stainless steel plate in a hollow cylindrical shape, the welded bonding part 105 may be long in the longitudinal direction of the heat transfer pipe.

Also, a ridge 106 that is continuous spirally around an inner circumference may protrude inward to form the heat transfer pipe 60. The plurality of fins 108 may be integrated with an outer surface of the heat transfer pipe 60.

The ridge 106 may be provided in a spiral shape inside the heat transfer pipe 60, and the ridge 106 and the groove 107 may be alternately disposed in the longitudinal direction of the heat transfer pipe 60.

The heat transfer pipe 60 may increase in inner heat transfer area of the heat transfer pipe 60 by the ridge 106 and the groove 107.

The ridge 106 and groove 107 according to an embodiment of the present invention are defined based on the inside of the heat transfer pipe 60.

Also, in the heat transfer pipe 60, the ridge 106 and the groove 107 may be alternately disposed in the longitudinal direction on the inner surface, the outer groove and the outer ridge may be alternately disposed on the outer surface in the longitudinal direction.

The plurality of fins 108 may be disposed to protrude from the outer surface of the heat transfer pipe 60 so as to increase in outer heat transfer area of the heat transfer pipe 60.

The heat transfer pipe 60 may have different heat transfer performance according to a height Hf of each of the fins 108 and a height Hr of each of the ridges 106.

[Maximum outer radius and maximum inner radius]

The height Hr of the ridge 106 is an important factor affecting the heat transfer performance, and the ridge 106 may allow the heat transfer performance to be improved rather than the heat transfer pipe without the ridge. Of course, it is preferable to have a height (Hr) that ensures durability of the heat transfer pipe 60. For example, when the height Hr of the ridge 106 is too low, the heat transfer pipe 60 may have an insufficient effect of improving the heat transfer performance, and when the height Hr of the ridge 106 is too high, a tear phenomenon may occur due to the formation of the ridge 106.

The height Hr of the ridge 106 may be different according to a maximum inner radius Max Ri and a maximum outer radius Max Ro of the heat exchanger pipe 60 on which the fin 108 and the ridge 106 are disposed. Here, the maximum inner radius Max Ri may be the largest radius of the inner diameter of the heat transfer pipe from a central axis O of the heat transfer pipe 60. The maximum outer radius Max Ro may be the largest radius of the outer radius from the central axis O to an end portion 109 of the fin 108.

That is, the maximum outer radius Max Ro may be the sum of the maximum inner radius Max Ri, a thickness t of the heat transfer pipe, and the height Hf of the fin 108 (i.e., Max Ro = Max Ri + t + Hf).

[Height of ridge and overall heat transfer coefficient]

The heat transfer pipe 60 of the absorption chiller according to an embodiment of the present invention may have a maximum outer diameter of about 10 mm to about 20 mm. In this case, the height Hr of the ridge 106 may be less than about 0.084 times the maximum inner radius Max Ri at which the fin 108 and the ridge 106 are disposed.

The height Hr of the ridge 106 may be greater than about 0.031 times the maximum outer radius Max Ro at which the fin 108 and the ridge 106 are disposed. For example, the ridge 106 of the heat transfer pipe may have a height of about 0.3 mm to about 0.5 mm.

Referring to the prior art document described in the background art, the overall heat transfer coefficient when the ridge 106 is disposed on the heat transfer pipe is higher than the overall heat transfer coefficient when the ridge 106 is not disposed. It is seen that as the height Hr of the ridge 106 increases, the overall heat transfer coefficient increases. Therefore, in the heat transfer pipe 60 made of the ductile stainless steel pipe according to an embodiment of the present invention, it is obvious that the overall heat transfer coefficient may be improved as the ridge 106 is provided, and as the height of the ridge 106 increases, the overall heat transfer coefficient.

[Method of manufacturing heat transfer pipe]

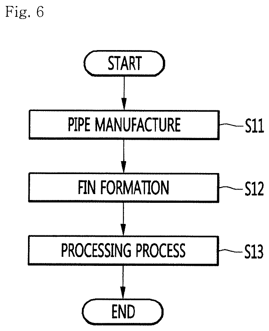

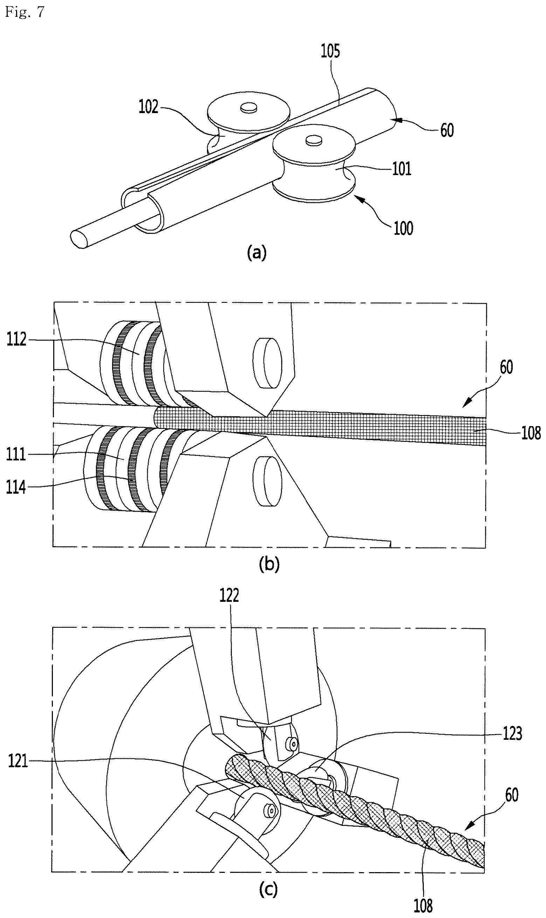

FIG. 6 is a flowchart illustrating a method for manufacturing the shape of the heat transfer pipe made of the ductile stainless steel in FIG. 4, and FIG. 7 is a process view illustrating a process of manufacturing the heat transfer pipe manufactured by the manufacturing method of FIG. 6.

Referring to FIGS. 6 and 7, a method for manufacturing the heat transfer pipe having the ridge 106 of FIG. 4 includes a pipe manufacturing process (S11), a fin processing step (S12), and a processing step (S13).

As illustrated in (a) of FIG. 7, the pipe manufacturing process (S11) is a process of rolling a ductile stainless steel plate and welding and bonding both ends of the ductile stainless steel plate to each other to form a ductile stainless steel pipe.

In the pipe manufacturing process (S1), the ends of the ductile stainless steel plate may be welded and bonded to each other while the ductile stainless steel plate is rolled as illustrated in (a) of FIG, 7. The ends may be pressed while passing between a pair of pressing rollers 101 and 102 and thus be formed in a hollow cylindrical shape.

The heat transfer pipe 60 made of the ductile stainless steel illustrated in (a) of FIG. 7 may have a welded bonding part in a longitudinal direction and move for the fin processing.

The fin processing process (S12) may be performed after the pipe manufacturing process (S11).

The fin processing process (S12) is a process of forming a plurality of fins 108 on an outer circumferential surface of the heat transfer pipe with first disk 111 and 112.

As illustrated in (b) of FIG. 7, an uneven part 114 may be formed on each of the first disks 111 and 112. The uneven part 114 may form a plurality of fins 108 on the outer circumferential surface of the heat transfer pipe formed in the pipe manufacturing process (S11). In detail, the fin processing process (S2) may form the fin 108 as the uneven part 114 while allowing the heat transfer pipe to pass between the pair of first disks 111 and 112.

Referring to (b) of FIG. 7, since the heat transfer pipe forms the fin 108 while passing through the first disk 111 and 112, the heat transfer pipe may have a portion supported by the uneven parts 114 of the first disks 111 and 112 without contacting the uneven parts 114. Thus, the portion of the heat transfer pipe supported by the first disks 111 and 112 without contacting the uneven part 114 may not form the fin 108.

That is, the heat transfer pipe may have a portion on which the fin 108 is not formed, which is referred to as a raw portion of the heat transfer pipe 60.

The raw portion may be formed by a predetermined distance in a longitudinal direction from one end of the heat transfer pipe 60. For example, the raw portion may have a length of about 10 cm.

The processing process (S13) may be performed after the fin processing process (S12).

As illustrated in (c) of FIG. 7, the processing process (S13) is a process of pressing the heat transfer pipe 108 from the outside of the heat transfer pipe, on which the fin 108 is formed, by using the second disks 121, 122, and 123 to form protruding ridges that are continued in a spiral shape on an inner circumferential surface of the heat transfer pipe.

In the processing process S13, the heat transfer pipe on which the fin is formed may pass between the plurality of second disks 121, 122, and 123 to form the ridge 106.

A height Hr of the ridge 106 formed by the processing process (S13) may be greater than about 0.031 times a maximum outer radius Max Ro of the heat transfer pipe on which the fin 108 and the ridge 106 are formed and also may be less than about 0.084 times a maximum inner radius Max Ri of the heat transfer pipe on which the fin 108 and the ridge 106 are formed.

In the processing process (S13), unlike the above-described processing method, it is possible to perform a process of inserting a processing tool having a ball shape, which is capable of forming the ridge 106 and the groove 107 inside the heat transfer pipe on the fin 108 is formed.

In the case of the prior art document described in the background art, it is difficult to process the internal shape by the ball-shaped processing tool due to the high hardness of the stainless steel (STS 400 series), and there is a problem that the cost of the processing tool increases because the wear of the ball-shaped processing tool is severe.

On the other hand, the ductile stainless steel used in the present invention has the advantage that the processing is performed by inserting the ball-shaped processing tool because the hardness is lower than that of the stainless steel according to the related art depending on the properties to be described later.

On the other hand, the copper pipe or the general stainless steel pipe has been used for the heat transfer pipe according to the related art. If the copper pipe is used as the heat transfer pipe, problems due to the high cost and the low corrosion resistance and abrasion resistance occur. If the general stainless steel pipe is used as the heat transfer pipe, it is difficult to expand the pipe for connection of the other pipe such as a water pipe, and also, the heat transfer pipe has low workability, bendability, and design freedom.

As a result, the heat transfer pipes should be less expensive than the copper pipes, have higher yield strength and maximum allowable stress, have superior corrosion resistance and abrasion resistance, and have lower strength and hardness than those of the ordinary stainless steel pipes.

When each of the first to seventh heat transfer pipes 61, 62, 63, 64, 65, 66, and 67 are made of the ductile stainless steel pipe used in the present invention, the cost and strength are less than those of the copper pipe according to the related art, the corrosion resistance and durability may be greater than those of the stainless steel pipe (STS 400 series) to realize excellent workability, and the installation may be more easy and convenient.

The heat transfer pipe using the ductile stainless steel pipe according to an embodiment of the present invention may be applied to one type of absorption chiller.

<Material of heat transfer pipe>

Hereinafter, constituents defining the characteristics of the ductile stainless steel used in the present invention will be described. It is noted that the constitutional ratios of the constituents described below are weight percent (wt%).

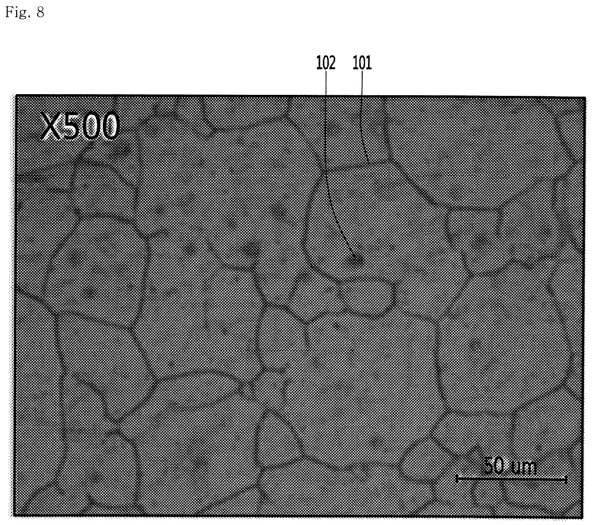

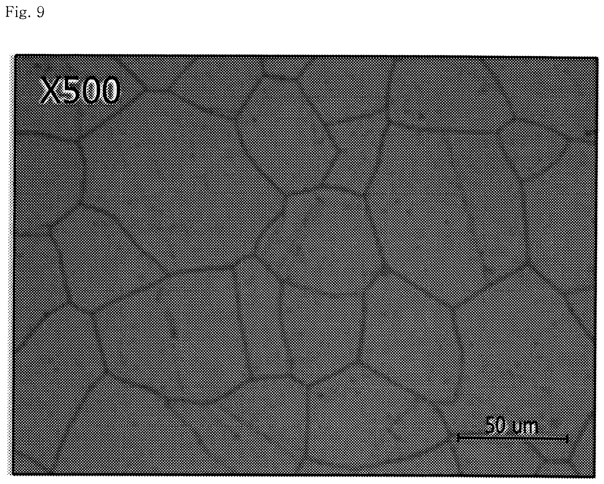

FIG. 8 is a microstructure photograph of a stainless steel having an austenite matrix structure of about 99% and a delta ferrite structure of about 1% or less, and FIG. 9 is a microstructure photograph of a stainless steel having only the austenite matrix structure.

1. Composition of stainless steel

(1) Carbon (C): 0.03% or less

The stainless steel includes carbon (C) and chromium (Cr). Carbon and chromium react with each other to precipitate into chromium carbide. Here, the chromium is depleted around a grain boundary or the chromium carbide which causes corrosion. Thus, the carbon may be maintained at a small content.

Carbon is an element that is bonded to other elements to act to increase creep strength. Thus, if the content of carbon exceeds about 0.03%, the ductility may be deteriorated. Thus, the content of the carbon is set to about 0.03% or less.

(2) Silicon (Si): more than 0% and less than 1.7%

An austenite structure has yield strength less than that of a ferrite structure or martensite structure. Thus, a matrix structure of the stainless steel may be made of austenite so that the ductile stainless steel according to an embodiment of the present invention has a bending property (or bending freedom) equal or similar to that of the copper.

However, silicon is an element forming ferrite, the more the content of silicon increases, the more a ratio of the ferrite in the matrix structure increases which improves stability of the ferrite. It is preferable that the silicon is maintained to be a small content, but it is impossible to completely block introduction of silicon into impurities during the manufacturing process.

When a content of silicon exceeds about 1.7%, the stainless steel hardly has ductility at a level of the copper material, and also, it is difficult to secure sufficient machinability. Thus, a content of silicon contained in the stainless steel is set to about 1.7% or less.

(3) Manganese (Mn): 1.5% to 3.5%

Manganese acts to inhibit phase transformation of the matrix structure of the stainless steel into a martensite-based material and expand and stabilize an austenite region. If a content of manganese is less than about 1.5%, the phase transformation effect of manganese does not sufficiently occur. Thus, to sufficiently obtain the phase transformation effect by manganese, a content of manganese is set to about 1.5% or less.

However, as the content of manganese increases, the yield strength of the stainless steel increases which deteriorates the ductility of the stainless steel. Thus, an upper limit of the content of manganese is set to about 3.5%.

(4) Chromium (Cr): 15% to 18%

Chromium is an element that improves corrosion initiation resistance of the stainless steel. The corrosion initiation refers to first occurrence of the corrosion in a state in which the corrosion does not exist in a base material, and the corrosion initiation resistance refers to a property of inhibiting the first occurrence of the corrosion in the base material. This may be interpreted to have the same means as corrosion resistance.

Since the stainless steel does not have the corrosion initiation resistance (corrosion resistance) when a content of chromium is less than about 15.0%, a lower limit of the content of chromium is set to about 15.0%.

On the other hand, if the content of chromium is too large, the ferrite structure is formed at room temperature which reduces the ductility. Particularly, the stability of the austenite is lost at a high temperature which reduces the strength. Thus, an upper limit of the content of the chromium is set to about 18.0% or less.

(5) Nickel (Ni): 7.0% to 9.0%

Nickel has a property of improving corrosion growth resistance of the stainless steel and stabilizing the austenite structure.

Corrosion growth refers to growth of corrosion that already occurs in the base material while spreading over a wide range, and the corrosion growth resistance refers to a property of suppressing the growth of the corrosion.

Since the stainless steel does not have the corrosion growth resistance when a content of nickel is less than about 7.0%, a lower limit of the content of nickel is set to about 7.0%.

Also, when the content of nickel is excessive, the stainless steel increases in strength and hardness, and thus it is difficult to secure sufficient machinability of the stainless steel. In addition, the cost increase, and thus it is not desirable economically. Thus, an upper limit of the content of the nickel is set to about 9.0% or less.

(6) Copper (Cu): 1.0% to 4.0%

Copper acts to inhibit phase transformation of the matrix structure of the stainless steel into a martensite structure and improve the ductility of the stainless steel. If a content of copper is less than about 1.0%, the phase transformation suppressing effect by copper does not sufficiently occur. Thus, to sufficiently obtain the phase transformation suppressing effect by copper, a lower limit of a content of copper is set to about 1.0% or less.

Particularly, a content of copper is to set to about 1.0% or more so that the stainless steel has a bending property equal or similar to that of the copper.

Although the more the content of copper increases, the more the phase transformation suppressing effect of the matrix structure increases, the increase gradually decreases. Also, if the content of copper is excessive to exceed about 4% to about 4.5%, since the effect is saturated, and the occurrence of martensite is promoted, it is not preferable. Also, since copper is an expensive element, it affects economic efficiency. Thus, an upper limit of the content of copper is set to about 4.0% so that the effect of suppressing the phase transformation of copper is maintained to the saturation level, and the economical efficiency is secured.

(7) Molybdenum (Mo): 0.03% or less
(8) Phosphorus (P): 0.04% or less
(9) Sulfur (S): 0.04% or less
(10) Nitrogen (N): 0.03% or less

Since and nitrogen are elements originally contained in the steel-finished product and cure the stainless steel, it is desirable to maintain the contents as low as possible.

2. Matrix structure of stainless steel

When the stainless steel is classified in view of a metal structure (or matrix structure), the stainless steel is classified into austenite type stainless steel containing chromium (18%) and nickel (8%) as main components and ferrite type stainless steel containing chromium (18%) as a main component, and martensite type stainless steel containing chromium (8%) as a main component.

Also, since the austenite type stainless steel is excellent in corrosion resistance against salt and acid and has high ductility, the ductile stainless steel according to the present invention is the austenite type stainless steel.

Also, the austenite structure has yield strength and hardness less than those of the ferrite structure or the martensite structure. Furthermore, when a crystal size is grown under the same condition, an average grain size of the austenite is the largest and thus is advantageous for improving the ductility.

To improve the ductility of the stainless steel, the matrix structure of the stainless steel may be formed as only the austenite structure. However, since it is very difficult to control the matrix structure of the stainless steel with only the austenite, it is inevitable to include other structures.

In detail, the other matrix structure that affects the ductility of the austenite type stainless steels is delta ferrite ($\delta$-ferrite) which occurs during the heat treatment process. That is, the more a content of the delta ferrite, the more the hardness of the stainless steel increases, but the ductility of the stainless steel decreases.

The stainless steel has an austenite matrix structure of about 99% or more and a delta ferrite matrix structure of about 1% or less on the basis of a grain size area. Thus, one of the methods for improving the ductility of the stainless steels is to reduce an amount of delta ferrite contained in the austenite type stainless steel.

Even when the ductile stainless steel according to an embodiment of the present invention has a delta ferrite matrix structure of about 1% or less, the fact that the delta ferrite is locally distributed in a specific crystal grain rather than being uniformly distributed throughout the crystal grain is advantageous in improvement of the ductility.

[Microstructure of ductile stainless steel]

FIG. 8 is a microstructure photograph of a stainless steel having an austenite matrix structure of about 99% and a delta ferrite structure of about 1% or less, and FIG. 9 is a microstructure photograph of a stainless steel having only the austenite matrix structure.

The stainless steel of FIG. 8 and the stainless steel of FIG. 9 have average grain sizes corresponding to grain size Nos. 5.0 to 7.0. The average gain size will be descried below.

Table 1 below is a graph of results obtained by comparing mechanical properties of the stainless steel (a material 1) of FIG. 3 and the stainless steel (a material 2) of FIG. 3.

[Table 1]

| Kinds | | Mechanical Property | | | |
| --- | --- | --- | --- | --- | --- |
| | | Yield Strength [MPa] | Tensile Strength [MPa | Hardness [Hv] | Elongation [%] |
| Material 1 | Stainless Steel (Austenite + Delta Ferrite) | 180 | 500 | 120 | 52 |
| Material 2 | Stainless Steel (Austenite) | 160 | 480 | 110 | 60 |

Referring to Table 1 above, it is seen that the material 2 has a physical property less than that of the material 1 in strength and hardness. Also, it is seen that the material 2 has an elongation greater than that of the material 1. Therefore, to lower the strength and the hardness of the stainless steel, it is ideal that the stainless steel has only the austenite matrix structure. However, since it is difficult to completely remove the delta ferrite matrix structure, it is desirable to minimize a ratio of the delta ferrite matrix structure.

That is, the material of the ductile stainless steel pipe is a stainless steel having a delta ferrite matrix structure occupied by about 1% or less.

Also, as described above, when the delta ferrite structures are densely distributed in a specific grain rather than uniformly distributed, the effect is more effective for the ductility the stainless steel.

In FIG. 8, a large grain 201 represents an austenite matrix structure, and a small grain 202 in the form of a black spot represents a delta ferrite matrix structure.

3. Average grain diameter of stainless steel

An average grain diameter of the stainless steel may be determined according to composition and/or thermal treatment conditions. The average grain diameter of the stainless steel affects the strength and the hardness of the stainless steel. For example, the more the average grain diameter decreases, the more the stainless steel increase in strength and hardness, and the more the average grain diameter increases, the more the stainless steel decrease in strength and hardness.

The ductile stainless steel according to an embodiment of the present invention has characteristics of low strength and hardness when compared to the stainless steel according to the related art in addition to good bending property by controlling the content of copper and the grain size area of delta ferrite, and also, the ductile stainless steel has strength and hardness greater than those of copper.

For this, the average grain diameter of the stainless steel is limited to about 30 $\mu$m to about 60 um. An average grain diameter of a general austenite structure is less than about 30 $\mu$m. Thus, the average grain diameter has to increase to about 30 $\mu$m through the manufacturing process and the thermal treatment.

According to the criteria of American Society for Testing and Materials (ASTM), the average grain diameter of about 30 $\mu$m to about 60 $\mu$m corresponds to grain size Nos. 5.0 to 7.0. On the other hand, an average grain diameter less than about 30 $\mu$m corresponds to ASTM grain size No. 7.5 or more.

If the average grain diameter of the stainless steel is less than about 30 $\mu$m, or the grain size number is greater than 7.0, it does not have the characteristics of low strength and low hardness required in the present invention. Particularly, the average grain diameter (or the grain size number) of the stainless steel is a key factor in determining the low strength and low hardness characteristics of the stainless steel.

Referring to Table 2 below, since the copper pipe according to the related art has physical properties of the low strength and the low hardness, the copper pipe is commercialized as the refrigerant pipe constituting the refrigerant circulation cycle, but there is a problem of reliability due to the corrosion and pressure resistance against a new refrigerant.

Also, since the stainless steels of Comparative Examples 2 to 5 have excessively large strength and hardness in comparison to the copper pipes, there is a problem that the machinability is poor even if the problem of the corrosion and the pressure resistance of copper are solved.

On the other hand, the stainless steel according to an embodiment of the present invention has strength and hardness greater than those the copper pipes according to the related art and has strength and hardness less than those of the stainless steels of Comparative Examples 2 to 5. Therefore, since the corrosion resistance and the pressure resistance of the copper pipe are solved, it is suitable to be used as a high-pressure new refrigerant pipe such as R32.

In addition, since it has an elongation greater than that of the copper pipe, the problem of machinability of the stainless steel according to the related art may also be solved.

[Table 2]

| Kinds | | Mechanical Property | | | |
|---|---|---|---|---|---|
| | | Yield Strength [MPa] | Tensile Strength [MPa] | Hardness [Hv] | Elongation [%] |
| Comparative Example 1 | Copper Pipe (C1220T) | 100 | 270 | 100 | 45 or more |
| Comparative Examples 2-5 | Stainless Steel (Grain Size No. 7.5 or more) | about 200 | about 500 | about 130 | 50 or more |
| The present disclosure | Stainless Steel (Grain Size No. 5.0 ~ 7.0) | about 160 | about 480 | about 120 | 60 or more |

In summary, the ductile stainless steel defined in the present invention may represent stainless steel which has about 99% or more of austenite and about 1% or less of delta ferrite and in which the above-described components are contained at a preset ratio.

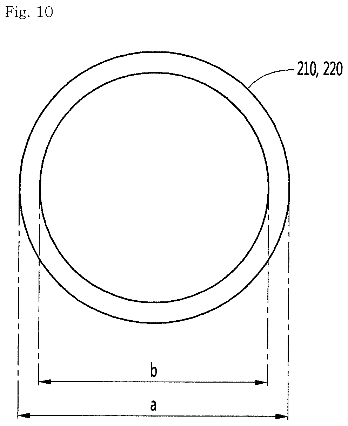

FIG. 10 is a view illustrating an outer diameter a and an inner diameter b of the heat transfer pipe according to the first embodiment of the present invention. Referring to FIG. 10, a thickness t may be an absolute value of a difference between the outer diameter a and the inner diameter b.

The thermal conductivity of the copper pipe according to the related art is superior to that of the stainless steel pipe. Therefore, the heat transfer pipe using the ductile stainless steel pipe according to an embodiment of the present invention has to secure the heat transfer performance to at least the level of the copper pipe or more.

In the heat transfer pipe using the ductile stainless steel pipe according to an embodiment of the present invention, the heat transfer performance may be improved by reducing a thickness t of the pipe or increasing a supply pressure of hot water or steam.

Since thermal conductivity is inversely proportional to the thickness t of the heat transfer plate, the thermal conductivity may be improved as the thickness t decreases. However, in the case of the copper pipe according to the related art, corrosion resistance, wear resistance, yield strength, and maximum allowable stress are significantly lower than those of the ductile stainless steel pipe. Therefore, a minimum thickness for the expansion operation while withstanding an internal pressure is much larger than that of the ductile stainless steel pipe.

In other words, the heat transfer pipe using the ductile stainless steel pipe may be excellent in strength, maximum yield stress, corrosion resistance, abrasion resistance, and the like when compared to the case of using the copper pipe according to the related art and thus may be formed with a much smaller thickness t at the same outer diameter. Therefore, the heat transfer performance of the heat exchanger pipe using the ductile stainless steel pipe may be the same or better than when using the conventional copper pipe.

Hereinafter, a method of setting a minimum thickness of the ductile stainless steel pipe that is superior in strength to the copper pipe will be described in detail.

[Method for setting thickness of ductile stainless steel]

A thickness of the ductile stainless steel pipe may be determined according to the following Mathematical Equation. The Mathematical Equation below is calculated based on ASME B31.1, which provides codes for standards and guidelines for a pipe, and KGS Code, which categorizes technical items such as facilities, technologies, and inspections specified by gas related laws and regulations.

[Equation 1]

$$t_m = \frac{P \times D_0}{2S + 0.8P} + T_{extra}$$

Here, tm represents a minimum thickness of the stainless steel pipe, P represents a design pressure (MPa), D0 represents an outer diameter (mm) of the stainless steel pipe, S represents allowable stress (MPa), and $T_{extra}$ represents a clearance thickness according to corrosion, thread machining, and the like. The $T_{extra}$ is determined to be about 0.2 when a material of the pipe is made of copper, aluminum, or stainless steel. Also, 0.8 is a constant to which a value of a correction coefficient y is applied, and a welded bonding efficiency coefficient in this equation is calculated as 1, and thus, it does not appear in Equation (1).

[Definition of pipe diameter]

As illustrated in FIG. 10, an outer diameter of the ductile stainless steel pipe used for the heat transfer pipe may be defined as a, and an inner diameter may be defined as b. Referring to Equation 1, it is seen that the minimum thickness of the pipe is proportional to the outer diameter of the pipe and inversely proportional to the allowable stress.

[Allowable stress (S)]

The allowable stress represents a value obtained by dividing reference strength by a safety factor, i.e., a maximum value of stress (deformation force) that is allowed to exert weight, which is considered to be tolerable without deformation or breakage of the pipe when external force is applied to the pipe.

In this embodiment, the allowable stress standard of the ductile stainless steel pipe is derived to satisfy the code written in ASME SEC. VIII Div. 1, and the allowable stress S may be set to a relatively small value of a value obtained by dividing the tensile strength of the pipe by 3.5 or a value obtained by dividing the yield strength of the pipe by 1.5. The allowable stress may be a value that varies depending on the material of the pipe and be determined to about 93.3 MPa on the basis of the SME SEC. VIII Div. 1.

When the same stress is applied to the pipe, the stainless steel may have a stress margin greater than that of copper, and thus design freedom of the pipe may increase.

[Outer diameter of ductile stainless steel pipe]

The outer diameter of the heat exchanger pipe which uses the ductile stainless steel pipe of the present invention is the same as that of the copper pipe according to the related art.

Table 3 below is data on the outer diameter, thickness, and tube temperature of the heat transfer tube using the copper pipe according to the related art.

[Table 3]

| [Copper Heat Transfer Pipe] | Outer Diameter (mm) | Thickness (mm) | Temperature (°C) |
|---|---|---|---|
| Condenser | 19.05 | 0.5 | 40 |
| Evaporator | 12.7 또는 16 | 0.5 | 6~60 |
| First (high-temperature) Regenerator | 16 | 0.5 | 95 |
| Second (low-temperature) Regenerator | 19.05 | 1.15 | 90 |
| Absorber | 16 | 0.5 | 27-40 |

Referring to Table 3, a thickness of the heat transfer pipe using the copper pipe according to the related art has a value of about 0.5 mm to about 1.15 mm in addition to a minimum thickness setting criterion (ASME B31.1) in consideration of an extra thickness required for the expansion of the pipe or the like. On the other hand, when the ductile stainless steel pipe of the present invention is used, since there is no reason to calculate the extra thickness required for the expansion of the pipe due to the higher strength and the maximum allowable stress than the copper pipe according to the related art, the thickness of the pipe may be set to the minimum thickness satisfying the minimum thickness setting criteria. According to the present invention, the thicknesses of the pipes is defined in claim 1.

[Design pressure P]

The design pressure may be determined corresponding to a maximum operating pressure of a cycle. In detail, the design pressure P setting criterion is set to the larger value of a value of about 1.1 times the maximum operating pressure and a value of about 1.8 kgf /cm$^2$ plus the maximum operating pressure.

In the present invention, the value of the design pressure P for calculating the minimum thickness tm of the heat transfer pipe made of the ductile stainless steel pipe is set to about 0.98 MPa or more and about 1.5 MPa or less. The design pressure P is minimum and maximum values that are conservatively applied to the aforementioned design pressure setting criteria.

[Method for calculating minimum thickness of ductile stainless steel]

As described above, the allowable stress S is determined as a value of about 93.3 MPa based on ASME SEC. VIII Div. 1, and the design pressure P is determined as a value of about 0.98 MPa to about 1.5 MPa. A minimum thickness of the pipe, which is calculated according to the outer diameter of the pipe by applying the determined allowable stress S and the design pressure P to Equation 1 may be confirmed by the following Table 4.

[Table 4]

| [Ductile Stainless Steel Pipe] | Outer Diameter (mm) | Design Pressure (MPa) | ASME B31.1 Minimum Thickness $t_s$ (mm) | JIS B8607 Minimum Thickness $T_s$-$T_{extra}$ (mm) |
|---|---|---|---|---|
| Condenser | 19.05 | 0.98 | 0.299 | 0.099 |
| | | 1.5 | 0.352 | 0.152 |

(continued)

| [Ductile Stainless Steel Pipe] | Outer Diameter (mm) | Design Pressure (MPa) | ASME B31.1 Minimum Thickness $t_s$ (mm) | JIS B8607 Minimum Thickness $T_s$-$T_{extra}$ (mm) |
|---|---|---|---|---|
| Evaporator | 12.7 | 0.98 | 0.266 | 0.066 |
| | | 1.5 | 0.301 | 0.101 |
| | 16 | 0.98 | 0.283 | 0.083 |
| | | 1.5 | 0.327 | 0.127 |
| First (high-temperature) Regenerator | 16 | 0.98 | 0.283 | 0.083 |
| | | 1.5 | 0.327 | 0.127 |
| Second (low-temperature) Regenerator | 19.05 | 0.98 | 0.299 | 0.099 |
| | | 1.5 | 0.352 | 0.152 |
| Absorber | 16 | 0.98 | 0.283 | 0.083 |
| | | 1.5 | 0.327 | 0.127 |

Referring to Table 4, a minimum thickness of the ductile stainless steel pipe derived based on ASME B31.1 and a minimum thickness of the ductile stainless steel pipe derived based on JIS B 8607 may be confirmed. Here, JIS B 8607 is a reference code for a pipe used in Japan. In case of JIS B 8607, a minimum thickness is derived to be less than that in case of ASME B31.1 because the $T_{extra}$ value that is the clearance thickness due to corrosion and the thread machining is not considered, unlike ASME B31.1. The $T_{extra}$ value may be set to about 0.2 mm in case of copper, a copper alloy, aluminum, an aluminum alloy, and stainless steel.

Referring to Table 3 and Table 4, in the case of the same outer diameter, when the heat transfer pipe designed to have the same outer diameter is made of the ductile stainless steel pipe as in the embodiment, the thickness of the pipe is more reduced to a minimum thickness of about 0.299 mm to about 0.352 mm in an embodiment from the temperature of about 0.5 mm to about 1.15 mm in the related art. This means that an inner diameter of the pipe is larger.

In more detail, in the heat transfer pipe using the ductile stainless steel pipe according to the embodiment, when the outer diameter is about 12.7 mm, the first heat transfer pipe 61 may have a thickness of at least 0.266 mm or more at a minimum design pressure (about 0.98 MPa) and a thickness of at least 0.301 mm or more at a maximum design pressure (about 1.5 MPa). Also, the first heat transfer pipe 61 may have a thickness of at least 0.283 mm at the minimum design pressure (about 0.98 MPa) and a thickness of at least 0.327 mm at the maximum design pressure (about 1.5 MPa) when the outer diameter is about 16 mm (based on ASME B31.1).

As a result, the inner diameter (outer diameterthickness) of the first heat transfer pipe 61 may have a value of about 12.434 mm or less at the minimum design pressure and a value of about 12.399 mm or less at the maximum design pressure when the outer diameter is about 12.7 mm. Also, when the outer diameter is about 16 mm, the first heat transfer pipe 61 may have a value of about 15.717 mm or less at the minimum design pressure and a value of about 15.673 mm or less at the maximum design pressure.

Similarly, the second heat transfer pipe 62 disposed inside the absorber 20 may have a thickness of at least 0.283 mm at the minimum design pressure (about 0.98 MPa) and a thickness of at least 0.327 mm at the maximum design pressure (about 1.5 MPa) when the outer diameter is about 16 mm (based on ASME B31.1).

As a result, the inner diameter (outer diameterthickness) of the second heat transfer pipe 62 may have a value of about 15.717 mm or less at the minimum design pressure and a value of about 15.673 mm or less at the maximum design pressure when the outer diameter is about 16 mm.

Also, the third heat transfer pipe 63 disposed inside the first regenerator 30 may have a thickness of at least 0.283 mm at the minimum design pressure (about 0.98 MPa) and a thickness of at least 0.327 mm at the maximum design pressure (about 1.5 MPa) when the outer diameter is about 16 mm (based on ASME B31.1).

As a result, the inner diameter (outer diameterthickness) of the third heat transfer pipe 63 may have a value of about 15.717 mm or less at the minimum design pressure and a value of about 15.673 mm or less at the maximum design pressure when the outer diameter is about 16 mm.

Also, the fourth heat transfer pipe 64 disposed inside the second regenerator 40 may have a thickness of at least 0.299 mm at the minimum design pressure (about 0.98 MPa) and a thickness of at least 0.352 mm at the maximum design pressure (about 1.5 MPa) when the outer diameter is about 19.05 mm (based on ASME B31.1).

As a result, the inner diameter (outer diameterthickness) of the fourth heat transfer pipe 64 may have a value of about 18.751 mm or less at the minimum design pressure and a value of about 18.098 mm or less at the maximum design pressure when the outer diameter is about 19.05 mm.

Similarly, the sixth heat transfer pipe 66 disposed inside the condenser 70 may have a thickness of at least 0.299 mm at the minimum design pressure (about 0.98 MPa) and a thickness of at least 0.352mm at the maximum design pressure (about 1.5 MPa) when the outer diameter is about 19.05 mm (based on ASME B31.1).

As a result, the inner diameter (outer diameterthickness) of the sixth heat transfer pipe 66 may have a value of about 18.751 mm or less at the minimum design pressure and a value of about 18.098 mm or less at the maximum design pressure when the outer diameter is about 19.05 mm.

The absorption chiller according to the first embodiment of the present invention includes an auxiliary regenerator 55 and an auxiliary absorber 50.

The fifth heat transfer pipe 65 disposed in the auxiliary absorber 50 may be the same as the outer diameter of the heat transfer pipe disposed in the absorber 20 as a pipe through which cooling water flows. Thus, the fifth heat transfer pipe 65 may have a thickness of at least 0.299 mm at the minimum design pressure (about 0.98 MPa) and a thickness of at least 0.352 mm at the maximum design pressure (about 1.5 MPa) when the outer diameter is about 19.05 mm (based on ASME B31.1).

As a result, the inner diameter (outer diameterthickness) of the fifth heat transfer pipe 65 may have a value of about 18.751 mm or less at the minimum design pressure and a value of about 18.098 mm or less at the maximum design pressure when the outer diameter is about 19.05 mm.

Also, the seventh heat transfer pipe 67 disposed in the auxiliary regenerator 55 may be the same as the outer diameter of the second (low-temperature) regenerator as a pipe through which how water flows. Thus, the seventh heat transfer pipe 67 may have a thickness of at least 0.299 mm at the minimum design pressure (about 0.98 MPa) and a thickness of at least 0.352 mm at the maximum design pressure (about 1.5 MPa) when the outer , diameter is about 19.05 mm (based on ASME B31.1).

As a result, the inner diameter (outer diameterthickness) of the seventh heat transfer pipe 67 may have a value of about 18.751 mm or less at the minimum design pressure and a value of about 18.098 mm or less at the maximum design pressure when the outer diameter is about 19.05 mm.

[COP increase]

As described above, in case where the suction pipe and the discharge pipe are provided as the ductile stainless steel pipes described in the embodiment, since the allowable stress of the stainless steel is greater than that of copper, it is seen that the thickness of the pipe is reduced by applying the relatively large allowable stress to Mathematical Equation 1. That is, the ductile stainless steel pipe having relatively high strength or hardness may be used to increase the allowable stress, and thus, a thickness at the same outer pipe diameter may be reduced.

Thus, even though the ductile stainless steel pipe according to this embodiment is designed to have the same outer diameter as that of the copper pipe according to the related art, the inner diameter may be designed to be larger to reduce flow resistance of a fluid flowing through the pipe. Accordingly, since a cold water flow rate increases, the efficiency (COP) of the absorption chiller may be improved.

In the case of the absorption chiller according to an embodiment of the present invention, the efficiency (COP) is determined by a ratio of the refrigerating capacity to a heating amount of regenerator. Equation regarding the efficiency (COP) of the absorption chiller is shown in Equation 2 below.

[Equation 2]

$$COP = \frac{Q_e}{Q_g}$$

In Equation 2, $Q_e$ (Kcal/h) means the refrigerating capacity, the refrigerating capacity is proportional to the cold water flow rate (m$^3$/h). Also, $Q_g$ (kcal/h) means a heat input amount.

As described above, the heat transfer pipe using the ductile stainless steel pipe according to an embodiment of the present invention is expanded because the inner diameter of the pipe than the copper pipe according to the related art is used, the cold water flow rate increases, and the efficiency (COP) may be improved due to the increase of the cold water flow rate.

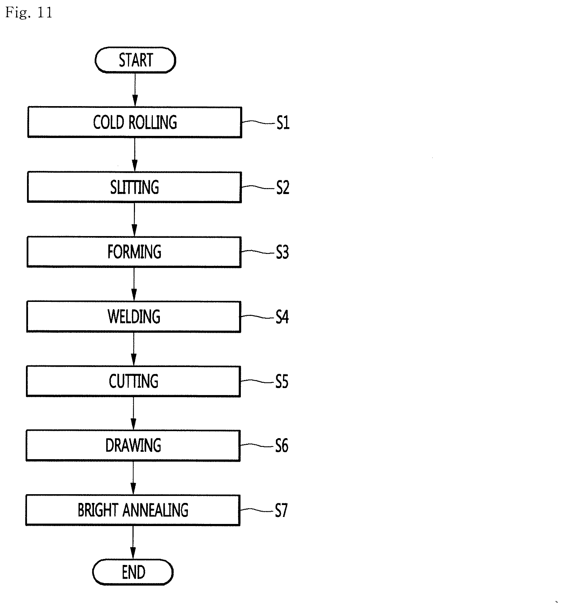

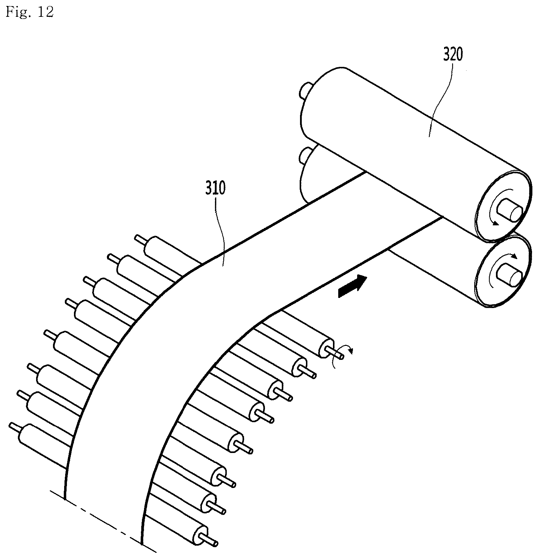

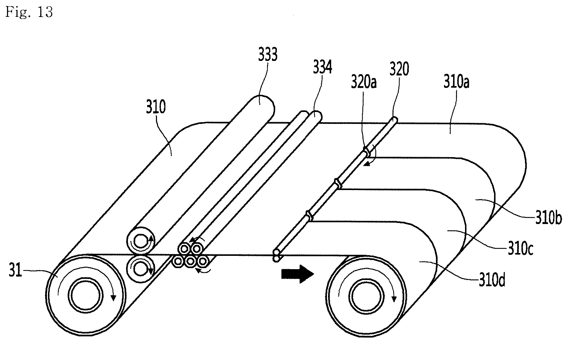

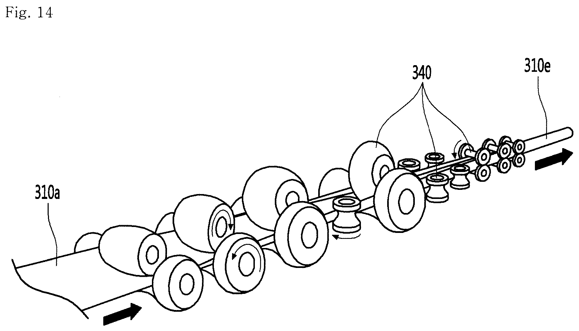

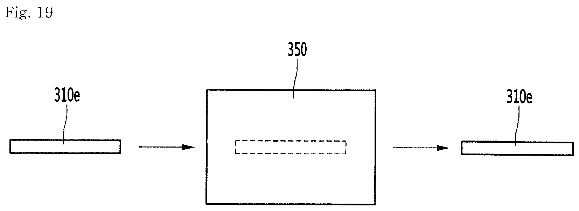

FIG. 11 is a flowchart illustrating a method for manufacturing the ductile stainless steel pipe according to the first embodiment of the present invention, FIG. 12 is a schematic diagram of a cold rolling process of FIG. 11, FIG. 13 is a schematic diagram of a slitting process of FIG. 11, FIG. 14 is a schematic diagram of a forming process of FIG. 11, FIGS. 15 to 18 are cross-sectional views illustrating a process of manufacturing a ductile stainless steel pipe according to the manufacturing method of FIG. 11, and FIG. 19 is a schematic diagram of a bright annealing process of FIG. 11.

As described above, even though the stainless steel according to the related art has strength and hardness greater than those of copper, the machinability may be limited. Particularly, there is a problem that the stainless steel is limited in bending.

[Required property of ductile stainless steel pipe]

To solve these problems, since the ductile stainless steel pipe according to the present invention has a composition containing copper, a matrix structure made of austenite, and an average grain size of about 30 $\mu$m to about 60 $\mu$m, the ductile stainless steel pipe may have strength and hardness less than those of the stainless steel pipe according to the related art.

Particularly, the austenite has low yield strength and low hardness characteristics when compared to ferrite or martensite. Thus, to manufacture the ductile stainless steel pipe having the characteristics of the low strength and the low hardness required in this embodiment, it is required to have an austenite matrix structure of about 99% or more and a delta ferrite matrix structure of about 1% or less on the basis of a grain size area of the ductile stainless steel pipe.

For this, the ductile stainless steel pipe may have austenite matrix structure of about 99% or more and the delta ferrite matrix structure of about 1% or less on the basis of the grain size area of the ductile stainless steel pipe by applying the composition ratio and performing an additional thermal treatment.

[Thermal treatment process of ductile stainless steel]

A thermal treatment process of the ductile stainless steel pipe will be described in detail.

Unlike that the pipe made of copper is manufactured by a single process such as drawing, it is difficult to manufacture the pipe made of the ductile stainless steel through a single process because of having strength and hardness greater than those of copper.

The thermal treatment process of the ductile stainless steel pipe according to this embodiment may include a cold rolling process S1, a slitting process S2, a forming process S3, a welding process S4, a cutting process S5, a drawing process S6, and a bright annealing process S7.

[First process: cold rolling process (S1)]

The cold rolling process S1 may be understood as a process for rolling the ductile stainless steel provided in the casting process by passing through two rotating rolls at a temperature below a recrystallization temperature. That is, in the cold-rolled ductile stainless steel, unevenness or wrinkles on a surface of a thin film may be improved, and surface gloss may be given on the surface.

As illustrated in FIG. 12, the ductile stainless steel is provided in the form of a sheet 310, and the sheet 310 is provided to be wound in a coil shape by an uncoiler.

The sheet 310 may receive continuous force by passing between the two rotating rolling rolls 320 disposed in a vertical direction, and thus the sheet 310 may be widened in surface area and thinned in thickness. In this embodiment, the ductile stainless steel is provided in the form of a sheet having a thickness of about 1.6 mm to about 3 mm in the casting process, and the sheet may be cold-machined to a sheet having a thickness of about 1 mm or less through the cold rolling process S1.

[Second process: slitting process (S2)]

The slitting process S2 may be understood as a process of cutting the cold-machined sheet 310 into a plurality of sections having a desired width by using a slitter. That is, the single sheet 310 may be cut and machined into a plurality of pieces through the slitting process S2.

As illustrated in FIG. 13, the cold-machined sheet 310 may pass through the slitter 332 while the wound coil is unwound by the rotation of the uncoiler 331 in the state in which the sheet 310 is wound in a coil shape around an outer circumferential surface of the uncoiler 331.

For example, the slitter 332 may include a shaft that is disposed in the vertical direction of the sheet 310 and a rotational cutter 332a coupled to the shaft. The rotational cutter 332a may be provided in plurality, and the plurality f rotational cutters 332 may be spaced apart from each other in a width direction of the sheet 310. Spaced distances between the plurality of rotational cutters 332a may be the same or different from each other in some cases.

Thus, when the sheet 310 passes through the slitter 332, the single sheet 310 may be divided into a plurality of sheets 310a, 310b, 310c, and 310d by the plurality of rotational cutters 332a. In this process, the sheet 310 may have a suitable diameter or width of the refrigerant pipe to be applied. Here, the sheet 310 may be pressed by a plurality of support rollers 333 and 334 arranged in the vertical direction so as to be precisely cut by the slitter 332.

When the slitting process S2 is completed, a bur may be formed on an outer surface of the sheet 310, and the bur needs to be removed. If the bur remains on the outer surface of the sheet 310, welding failure may occur in a process of welding the pipe machined in the form of the sheet 310 to the other pipe, and the refrigerant may leak through a poor welding portion. Accordingly, when the slitting step S2 is completed, a polishing process for removing the bur needs to be additionally performed.

[Third process: foaming process (S3)]

The forming process S3 may be understood as a process of molding the ductile stainless steel in the form of a sheet 310a by passing through a plurality of molding rolls 340 to manufacture the ductile stainless steel in the form of a pipe 310a.

As illustrated in FIG. 14, in the state that the sheet 310a is wound in the form of the coil on the outer circumferential surface of the uncoiler, the coil wound by the rotation of the uncoiler is unwound to enter into the multi-staged forming rolls 340 that alternately disposed in the vertical or horizontal direction. The sheet 310a entering into the multi-staged molding rolls 340 may successively pass through the molding rolls 340 and thus be molded in the form of a pipe 310e of which both ends are adjacent to each other.

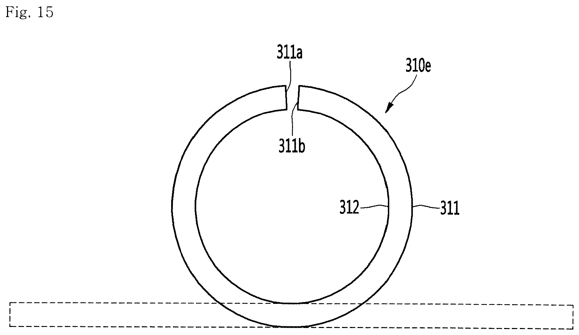

FIG. 15 illustrates a shape in which the ductile stainless steel having the sheet shape is wound and then molded in the form of a pipe 10e. That is, the ductile stainless steel having the form of the sheet 10a may be molded into a pipe 310e, of which both ends 311a and 311b approach each other, through the forming process S3.

[Fourth process: welding process (S4)]

The welding process S4 may be understood as a process of bonding both the ends 311a and 311b of the pipe 310e, which approach each other by being wound by the forming process S3, to manufacture a welded pipe. In the welding process S4, the welded pipe may be realized by butt-welding both ends facing each other through a melting welding machine, for example, a general electric resistance welding machine, an argon welding machine, or a high-frequency welding machine.

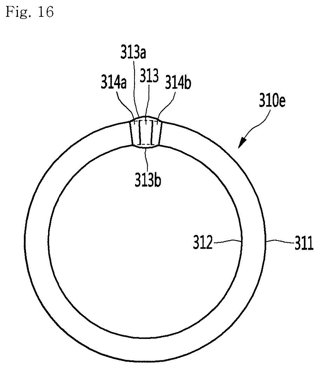

FIG. 16 illustrates a pipe manufactured by rolling and welding a sheet made of the ductile stainless steel. Particularly, both the ends 311a and 311b of the pipe 310e may be welded in a longitudinal direction of the pipe 310e to bond both the ends 311a and 311b to each other.

Here, in the welding process, a weld zone 313 is formed in the longitudinal direction of the pipe 310e. As illustrated in FIG. 11, since beads 313a and 313b that slightly protrude from an inner circumferential surface 311 and an outer circumferential surface 312 of the pipe 310e are formed at the weld zone 313, each of the inner circumferential surface 311 and the outer circumferential surface 312 of the pipe 310e does not have a smooth surface.

Heat-affected zones 314a and 314b may be further formed on both sides of the welded zone 313 by heat during the welding process. The heat-affected zones 314a and 314b may also be formed in the longitudinal direction of the pipe 310e, like the welded zone 313.

[Fifth process: cutting process (S5)]

The cutting process S5 may be understood as a process of partially cutting the bead 313a of the welded zone 313 so that the outer circumferential surface 311 of the pipe 310e has the smooth surface. The cutting process S5 may be continuous with the welding process S4.

For example, the cutting process S5 may include a process of partially cutting the bead 313a using a bite while moving the pipe in the longitudinal direction through press bead rolling.

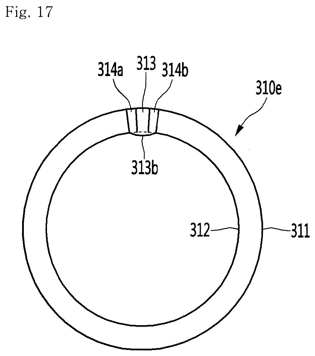

FIG. 17 illustrates a ductile stainless steel pipe in which the cutting process S5 is finished. That is, the bead 313a formed on the outer circumferential surface 311 of the pipe 310e may be removed through the cutting process S5. In some cases, the cutting process S5 may be performed together with the welding process S4, whereas the cutting process S5 may be omitted.

[Sixth process: drawing process (S6)]

The drawing process S6 may be understood as a process of applying external force to the bead 313b of the welded zone 313 so that the outer circumferential surface 312 of the pipe 310e has the smooth surface.

For example, the drawing process S6 may be performed by using a drawer including dies having a hole with an inner diameter less than an outer diameter of the pipe 310e manufactured through the forming process S3 and the welding process S4 and a plug having an outer diameter with an outer diameter less than an inner diameter of the pipe 310e manufactured through the forming process S3 and the welding process S4.

Particularly, the pipe 310e in which the welding process S4 and/or the cutting process S5 are performed may pass through the hole formed in the dies and the plug. Here, since the bead 313a formed on the outer circumferential surface 311 of the pipe 310e protrudes outward from a center of the outer circumferential surface 311 of the pipe 310e, the bead 313a may not pass through the hole of the dies and thus be removed while being plastic-deformed.

Similarly, since the bead 313b formed on the inner circumferential surface 312 of the pipe 310e protrudes toward the center of the inner circumferential surface 312 of the pipe 310e, the bead 313b may not pass through the plug and thus be removed while being plastic-deformed.

That is, as described above, the welding beads 313a and 313b formed on the inner circumferential surface 312 and the outer circumferential surface 311 of the pipe 310e may be removed through the drawing process S6. Also, since the welded bead 313a on the inner circumferential surface 312 of the pipe 310e is removed, it is possible to prevent a protrusion from being formed on the inner circumferential surface 312 of the pipe 310e when the pipe 310e is expanded for the refrigerant pipe.

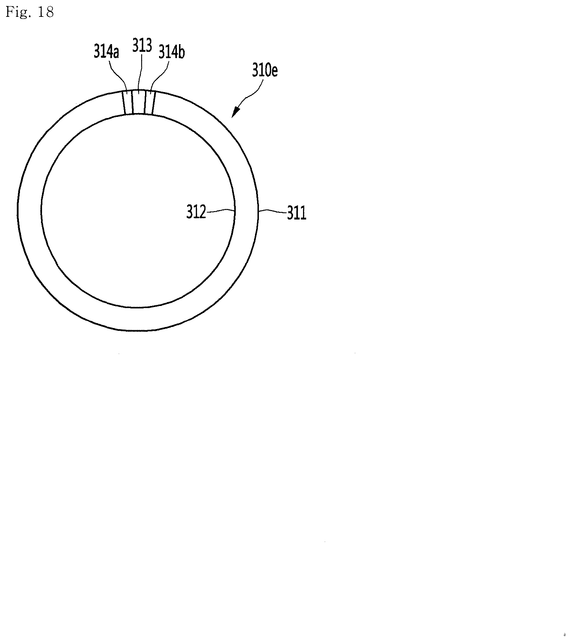

FIG. 18 illustrates a ductile stainless steel pipe in which the drawing process S6 is finished. That is, the beads 313a and 313b formed on the inner and outer circumferential surfaces 311 and 312 of the pipe 310e may be removed through the drawing process S6.

The reason for forming the outer and inner circumferential surfaces 311 and 312, which have the smooth surfaces, of the pipe 310e is for forming the uniform inner diameter of the pipe 310e and easily connecting the pipe to the other pipe. Also, the reason for forming the uniform inner diameter in the pipe 310e is for maintaining a smooth flow of the refrigerant and a constant pressure of the refrigerant. Although not shown, after the drawing process S6, a groove (not shown) may be formed on the outer and inner circumferential surfaces 311 and 312 of the pipe 310e through mechanical machining.

[Seventh process: bright annealing process (S7)]

The bright annealing process S7 may be understood as a process for heating the pipe 310e from which the welded beads are removed to remove heat history and residual stress remaining in the pipe 310e. In this embodiment, the austenite matrix structure of about 99% or more and the delta ferrite matrix structure of about 1% or less are formed based on the grain size area of the ductile stainless steel, and also, to increase the average grain size of the ductile stainless steel to about 30 $\mu$m to about 60 $\mu$m, the thermal treatment process is performed.

Particularly, the average grain diameter (or the grain size number) of the ductile stainless steel is a key factor in determining the low strength and low hardness characteristics of the stainless steel. Particularly, the bright annealing process S7 is performed by annealing the pipe 310e, from which the welded beads are removed, in a stream of a reducing or non-oxidizing gas and cooling the annealed pipe 310e as it is after the annealing.

As illustrated in FIG. 19, the pipe 310e from which the welded beads are removed passes through an annealing furnace 350 at a constant speed. The inside of the annealing furnace 350 may be filled with an atmospheric gas, and also, the inside of the annealing furnace 350 may be heated at a high-temperature by using an electric heater or a gas burner.

That is, the pipe 310 may receive a predetermined heat input while passing through the annealing furnace 350. Accordingly, the ductile stainless steel may have the austenite matrix structure and the average grain size of about 30 $\mu$m to 60 $\mu$m due to the heat input.

The heat input represents a heat amount entering into a metal member. Also, the heat input plays a very important role in metallographic microstructure control. Thus, in this embodiment, a thermal treatment method for controlling the heat input is proposed.

In the bright annealing process S7, the heat input may be determined according to a thermal treatment temperature, an atmospheric gas, or a feed rate of the pipe 310e.

In case of the bright annealing process S7 according to this embodiment, the thermal treatment temperature is about 1050°C to 1100°C, the atmospheric gas is hydrogen or nitrogen, and the feed rate of the pipe 310e is 180 mm/min to 220 mm/min. Thus, the pipe 310e may pass through the annealing furnace 350 at a feed rate of about 180 mm/min to about 220 mm/min at an annealing heat treatment temperature of about 1050°C to about 1100°C in the annealing furnace 350.

Here, If the annealing heat treatment temperature is less than about 1,050°C, sufficient recrystallization of the ductile stainless steel does not occur, the fine grain structure is not obtained, and the flattened worked structure of the grain is generated to reduce creep strength. On the other hand, if the annealing temperature exceeds about 1,100°C, high-temperature intercrystalline cracking or ductility deterioration may occur.

Also, when the pipe 310e from which the welded beads are removed passes through the annealing furnace 350 at a transfer speed of less than 180 mm/min, the productivity is deteriorated due to a long time. On the other hand, when the pipe 310e passes through the annealing furnace 350 at a transfer speed exceeding about 220 mm/min, the stress existing in the ductile stainless steel is not sufficiently removed, and also the average grain size of the austenite matrix structure is less than about 30 $\mu$m. That is, if the transfer speed of the pipe 310e is too high, the average grain size of the ductile stainless steel is less than about 30 $\mu$m, and the low strength and low hardness properties required in the this embodiment may not be obtained.

As described above, the ductile stainless steel pipe according to the present invention, which is manufactured through the cold rolling process S1, the slitting process S2, the forming process S3, the welding process S4, the cutting process S5, the drawing process S6, and the bright annealing process S7 may be temporarily stored in a coiled state by a spool or the like and then be shipped.

Although not shown, after the bright annealing process S7 is completed, shape correction and surface polishing processing may be further performed.

<Fatigue fracture test>

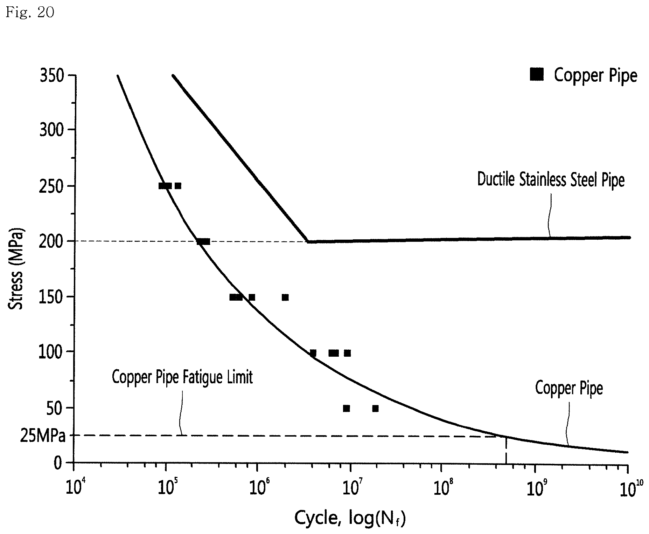

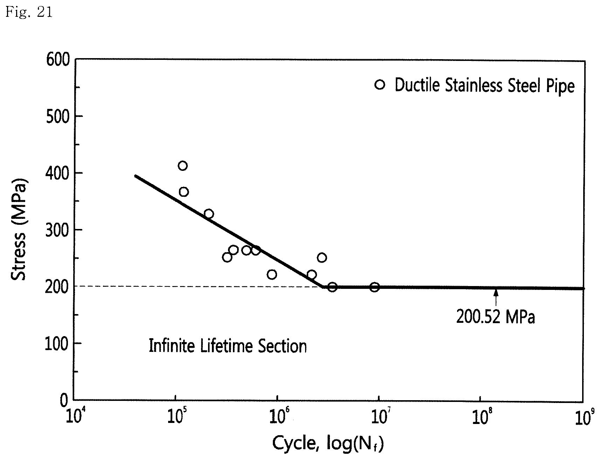

FIG. 20 is a graph illustrating result values obtained through an S-N curve test for comparing fatigue limits of the ductile stainless steel pipe according to the first embodiment of the present invention and a copper pipe according to the related art, and FIG. 21 is a graph illustrating an S-N curve teat of the ductile stainless steel pipe according to the first embodiment of the present invention.

Referring to FIGS. 20 and 21, the ductile stainless steel pipe according to the first embodiment of the present invention has a fatigue limit (or endurance limit) of about 200.52 MPa. This is a value greater by about 175 MPa (8 times) than the copper pipe according to the related art having a fatigue limit of 25 MPa. That is, the ductile stainless steel pipe may have improved durability, reliability, life expectancy, and design freedom when compared to the copper pipe according to the related art. Hereinafter, effects of the ductile stainless steel pipe will be described in more detail.

[Maximum allowable stress]

The ductile stainless steel pipe may be determined in maximum allowable stress value on the basis of the fatigue limit value. The maximum allowable stress represents a maximum stress limit that may be allowed to safely use a pipe or the like. For example, the pipe and the like may receive external force during use, and stress may be generated in the pipe due to the external force. Here, when the internal stress is equal to or greater than a certain critical stress value determined by a factor such as a solid material, the pipe may be permanently deformed or broken. Therefore, the maximum allowable stress may be set to safely use the pipe.

[Fatigue limit]

When repeated stress is applied continuously to a solid material such as steel, the solid material may be broken at stress much lower than tensile strength. This is called fatigue of the material, and a failure due to the fatigue is called fatigue failure. The fatigue of the material occurs when the material undergoes a repeated load. Also, the material may be broken eventually when beyond a certain limit due to the repeated load. Here, an endurance limit in which the material is not broken even under repeated load is defined as a fatigue limit endurance limit.

[Relationship between fatigue limit and S-N curve]

An S-N curve shows the number of repetitions (N, cycles) until certain stress is repeated. In detail, the solid material is destroyed more quickly if it is subjected to repeated stress several times, and the number of repetitions of stress till the failure is affected by the amplitude of the applied stress. Thus, effects due to the degree of stress and the number of repetitions of stress until the solid material is broken may be analyzed through the S-N curve.

In the S-N curve test graph of FIGS. 20 and 21, a vertical axis represents a stress amplitude (Stress), and a horizontal axis represents a log value of the repetition number. Also, the S-N curve is a curve drawn along the log value of the number of repetitions until the material is destroyed when the stress amplitude is applied. In general, the S-N curve of the metal material increases as the stress amplitude decreases, the number of repetitions till the fracture increases. Also, when the stress amplitude is below a certain value, it is not destroyed even if it repeats infinitely. Here, the stress value at which the S-N curve becomes horizontal represents the fatigue limit or endurance limit of the above-mentioned material.

[Fatigue limit problem of copper pipe]

In the S-N curve of the copper pipe according to the related art, which is based on fatigue failure test data of the copper pipe of FIG. 20 according to the related art, it is seen that the fatigue limit of the copper pipe according to the related art is about 25 MPa. That is, maximum allowable stress of the copper pipe is about 25 MPa. As a result, the copper pipe according to the related art has a problem of shortening the service life of the pipe and deteriorating the durability due to the above-described low maximum allowable stress value.

[Effect of ductile stainless steel pipe]

Referring to FIGS. 20 and 21, in the SN curve according to this embodiment, which is based on the fatigue failure test data of the ductile stainless steel pipe, the fatigue limit of the ductile stainless steel pipe is about 200.52 MPa, which is greater 8 times than that of the copper stainless steel pipe. That is, maximum allowable stress of the ductile stainless steel pipe is about 200 MPa.

Accordingly, the ductile stainless steel pipe has a design margin of about 175 MPa when compared to the fatigue limit of the copper pipe. That is, the outer diameter of the ductile stainless steel pipe is the same as the outer diameter of the copper pipe according to the related art, and the inner diameter may be expanded. That is, a minimum thickness of the ductile stainless steel pipe may be less than that of the copper pipe, and even in this case in which the heat transfer pipe has a thickness to the minimum thickness of the ductile stainless steel pipe, the maximum allowable stress may be greater than that of the copper pipe due to the relatively high design margin. As a result, there is an effect that the design freedom the ductile stainless steel pipe is improved.

<Corrosion resistance test>

FIG. 18 is a view illustrating a plurality of ductile stainless steel pipes, aluminum (Al) pipes, and copper pipes, which are objects to be tested for corrosion resistance, FIG. 19 is a table illustrating results obtained by measuring a corrosion depth for each pipe in FIG. 18, and FIG. 20 is a graph illustrating results of FIG. 19.

Corrosion resistance represents a property of a material to withstand corrosion and erosion. It is also called corrosion resistance. Likewise, abrasion resistance means that material resists abrasion. In general, stainless steel or titanium is more corrosion resistance and abrasion resistance than carbon steel because it does not well corrode. The corrosion resistance test includes a salt water spray test and a gas test. The resistance of the product to the atmosphere including the salt may be determined through the corrosion resistance test to examine the heat resistance, the quality and uniformity of the protective coating.

[Complex corrosion test]

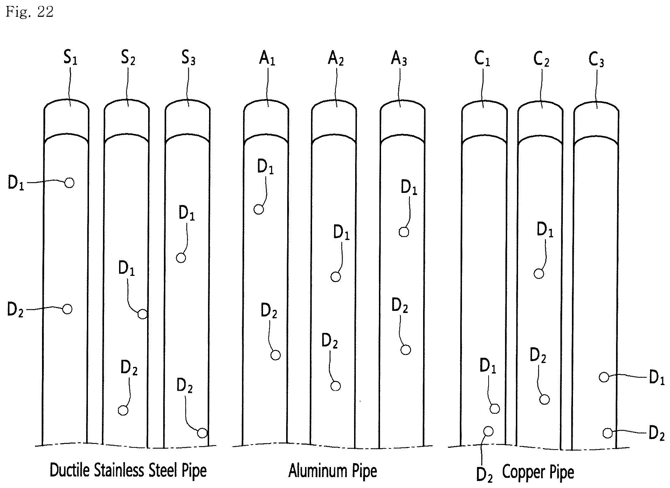

Referring to FIGS. 22 to 24, when the cyclic corrosion test is performed on the ductile stainless steel pipe according to an embodiment of the present invention together with comparative groups (Al, Cu) of the other pipe, it is confirmed that the corrosion resistance is the most excellent because the corrosion depth ($\mu$m) is the smallest value in comparison with the comparative group. Hereinafter this will be described in detail.

The cyclic corrosion test represents a corrosion test method in which an atmosphere of salt spraying, drying and wetting is repeatedly performed for the purpose of approaching or promoting the natural environment. For example, evaluation may be carried out by setting the test time to be 30 cycles, 60 cycles, 90 cycles, 180 cycles, and the like, with 8 times of one cycle, 2 hours of spraying with salt, 4 hours of drying, and 2 hours of wetting. The salt spraying test during the complex corrosion test is the most widely used as an accelerated test method for examining the corrosion resistance of plating and is a test for exposing a sample in the spray of saline to examine the corrosion resistance.

Referring to FIG. 22, a plurality of ductile stainless steel pipes S1, S2, and S3, a plurality of aluminum pipes A1, A2, and A3, and a plurality of copper pipes C1, C2, and C3 in which the complex corrosion test is performed, are illustrated, and the corrosion depth ($\mu$m) was measured by defining arbitrary positions D1 and D2 in each pipe.

[Test result and advantages of ductile stainless steel pipe]

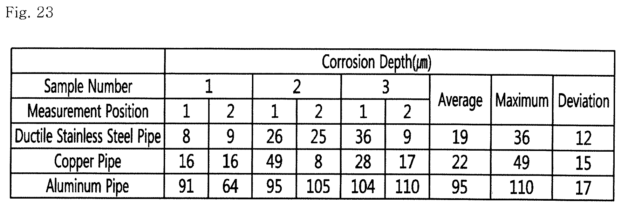

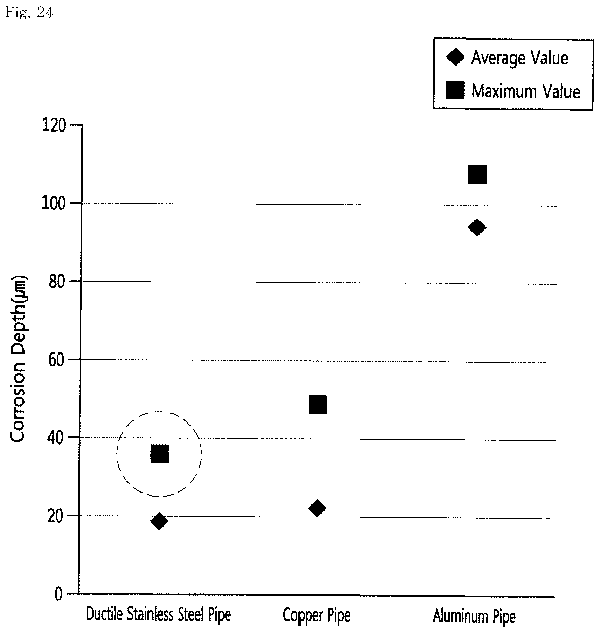

Referring to FIGS. 23 and 24, the pipe measured to have the deepest corrosion depth is the aluminum pipe having an average of about 95 $\mu$m. Next, the average copper pipe is about 22 $\mu$m, and the ductile stainless steel pipe has an average value of about 19 $\mu$m, which is the most corrosionresistant measurement value. Also, the maximum value Max of the corrosion depth $\mu$m is the deepest for the aluminum pipe at about 110 $\mu$m, followed by the copper pipe at about 49 $\mu$m, and the ductile stainless steel pipe at about 36 $\mu$m.

Attempts have been made to use the aluminum pipe to replace the copper pipe according to the related art. However, since the corrosion resistance is low as in the above-mentioned test results, there is a great disadvantage that the corrosion resistance is lowest. On the other hand, the ductile stainless steel pipe has the most excellent corrosion resistance and is superior in durability and performance compared to the pipe according to the related art.

<Bending test>

In the case of installing the absorption chiller by connecting pipes to each other according to individual installation environments, the pipe is not only a linear pipe, but also a bent pipe formed by bending with external force of a worker installing the pipe. Also, the straight pipe or the bent pipe connects the outdoor unit to the indoor unit.

The general stainless steel pipe according to the related art has strength greater than that of the copper pipe. Therefore, due to the high strength of the stainless steel pipe according to the related art, it is very difficult to form a bent pipe. Therefore, there has been a problem that the copper pipe or the aluminum pipe has to be used for the convenience of installation work.

However, the ductile stainless steel pipe according to the embodiment is lower than the strength of the stainless steel according to the related art and may be lowered to a higher level than the copper pipe according to the related art. Thus, since the above-mentioned bent pipe or the like may be formed, the low moldability of the stainless steel pipe according to the related art may be solved. Hereinafter, the bending test will be described below in detail.

[Shape of bent pipe and curvature radius]

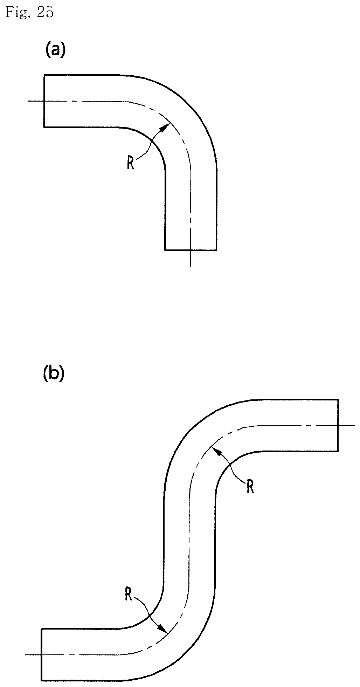

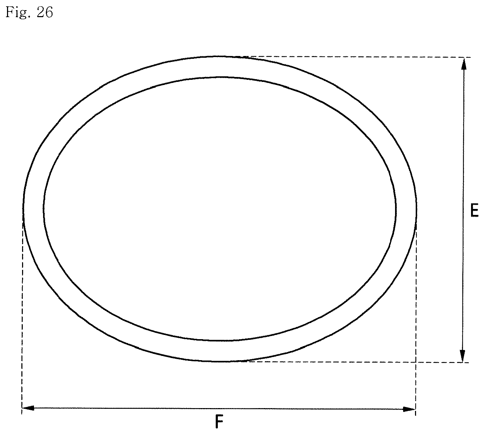

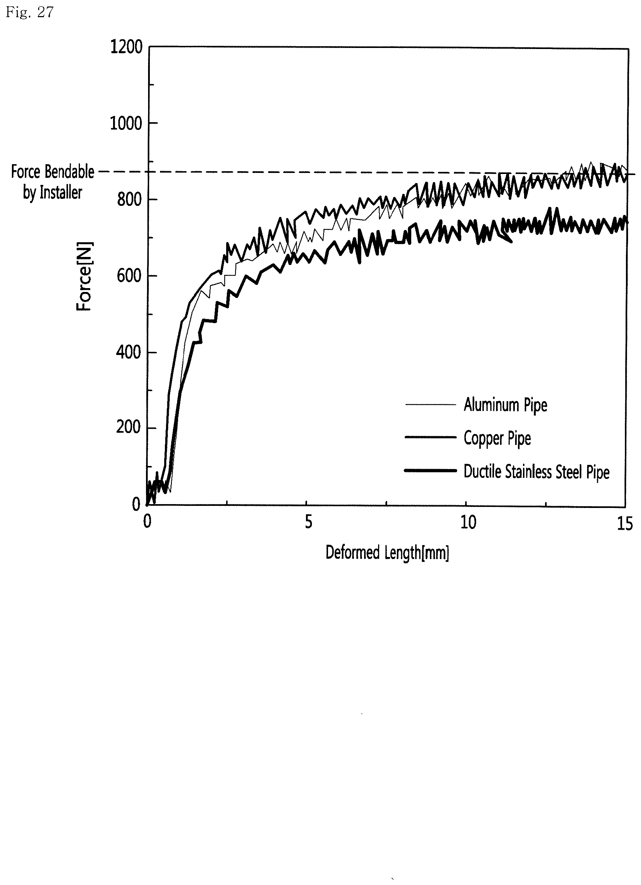

FIG. 25 is a view illustrating a shape in which the ductile stainless steel pipe is bent according to an embodiment of the present invention, FIG. 26 is a cross-sectional view illustrating a portion of the bent pipe, and FIG. 27 is a graph illustrating results obtained through a test for comparing bending loads according to deformation lengths of the ductile stainless steel pipe, the copper pipe, and the aluminum pipe.

Referring to FIG. 25, the ductile stainless steel pipe according to an embodiment of the present invention may be bent by bending force. For example, the ductile stainless steel pipe may have a ','-shape as illustrated in FIG. 25(a) or an 'S' shape as illustrated in FIG. 25(b).

Referring to FIGS. 25(a) and 25(b), a central line of the ductile stainless steel pipe may include a curved portion having a curvature so as to be bent in the other direction in one direction. Also, the curve has a curvature radius R.

The curvature radius R is defined as a value indicating a degree of curvature at each point of the curve. The curvature radius R of the ductile stainless steel pipe forming the curved line may include a minimum curvature radius $R_{min}$ that may be used in a pipe which does not generate wrinkles even when the straight pipe is formed into a curved line and does not generate vibration. Also, the minimum curvature radius $R_{min}$ may be measured in a bent pipe that meets a setting criterion for a ratio of maximum and minimum outside diameters.

[Ratio of maximum/minimum outer diameters of ductile stainless steel pipe]

Referring to FIG. 26, the ductile stainless steel pipe may be provided as a bent pipe so that a ratio (E/F) of a maximum outer diameter (F) to a minimum outer diameter (E) is more than 0.85 and less than 1.

The ratio of the maximum and minimum outside diameters (E/F) is a conservatively estimated standard based on the standards of ASME (American Society of Mechanical Engineers) and JIS (Japanese Industrial Standards) (see Table 5).

Table 5 below shows setting criteria for the ratio of the maximum and minimum diameters.

[Table 5]

| | |
|---|---|
| ASME | (F-E) < 0.08*D |
| JIS | When R>4D, E > (2/3)*D |
| Setting Criteria | (E/F) > 0.85 |

In Table 5, D represents a value of the straight pipe (a reference pipe), and R represents a curvature radius.

Comparison of bendability of ductile stainless steel pipe, copper pipe, and aluminum pipe]

FIG. 27 illustrates results of testing the bending properties of the ductile stainless steel pipe satisfying the setting criteria (ratio of maximum and minimum outside diameters). In the bending property test, the ductile stainless steel pipe has a diameter Φ of about 15.88 mm.

The bending represents bending, downward or upward in a state in which the beam is bent when a load is applied. When the beam is bent downward, tensile force acts on the bottom portion, and when the beam is bent upward, compressive force acts on the bottom portion.

Referring to FIG. 27, force N applied to the aluminum pipe, the copper pipe, and the ductile stainless steel pipe according to the deformation length (mm), each of which has a pipe diameter Φ of about 15.88 mm is illustrated.

When the minimum curvature radius $R_{min}$ is measured at the pipe having a diameter Φ of about 15.88 mm, the copper pipe has a diameter of about 85 mm, and the ductile stainless steel pipe has a diameter of about 70 mm. Accordingly, since the ductile stainless steel pipe has a curvature radius R less than that of the copper pipe, it may be bent to be equal to or higher than that of the copper pipe.

Thus, since the ductile stainless steel pipe forms the curved pipe at a level equivalent to that of the copper pipe, the moldability may be improved when compared to the stainless steel pipe according to the related art. Here, the bending force is assumed to the maximum bending load of the copper pipe and the aluminum pipe. In this embodiment, the bending force may be about 900 N.

In the graph of the bending property test result, the force N applied in the section of about 0 mm to about 2.5 mm of the deformation length may sharply increase, and then the force at the deformation length may gradually decrease in inclination to approach the maximum force N.

Also, in the graph of the bending property test result, the maximum bending load of the ductile stainless steel pipe may be about 750 N, and the maximum bending load of each of the copper pipe and the aluminum pipe may be about 900 N. That is, the maximum bending load of the ductile stainless steel pipe is less than that of the pipe according to the related art.

Therefore, the ductile stainless steel pipe according to an embodiment of the present invention may be bent by using force within about 83% of the maximum bending load of each of the copper pipe and the aluminum pipe. As a result, the ductile stainless steel pipe may be bent by applying force less than that applied to form the copper pipe and the aluminum pipe to be bent.

In summary, the ductile stainless steel pipe according to an embodiment of the present invention has an effect of improving the moldability when compared to the stainless steel pipe, the copper pipe and the aluminum pipe according to the related art. Therefore, the easy in the installation may be improved.

<Second Embodiment>7

Hereinafter, descriptions will be made according to the second embodiment of the present invention. When compared to the first embodiment (absorption refrigerating machine), the second embodiment relates to an absorption cold and hot water dispenser in which a fossil fuel is used as a heat source.

Since the second embodiment is different from the first embodiment, the differences will be mainly described.

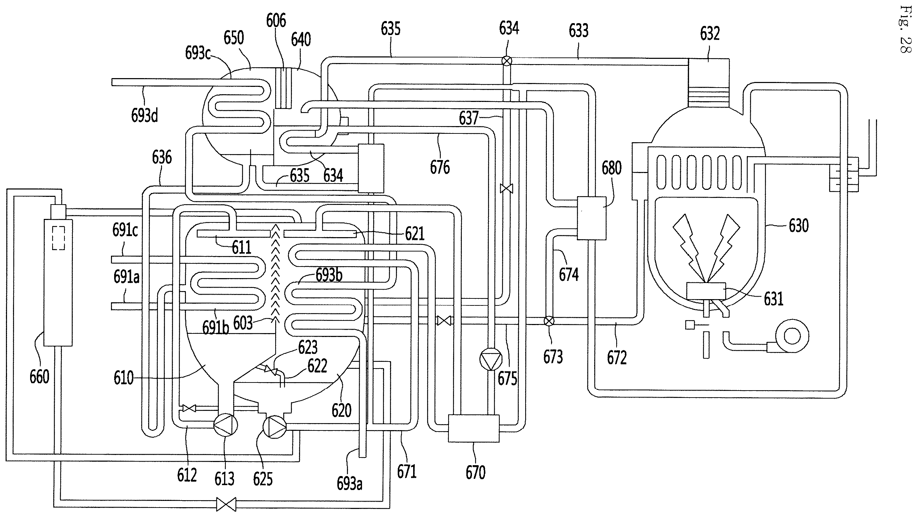

FIG. 28 is a view illustrating a configuration of an absorption chiller and a refrigerant cycle. In the second embodiment, an absorption chiller is based on the configuration of the absorption cold and hot water dispenser. The absorption chiller may also perform a heating mode in addition to a cooling mode.

Referring to FIG. 28, the absorption cold and hot water dispenser includes a first heat exchanger 610, an absorber 620, a high-temperature regenerator 630, a low-temperature regenerator 640, a second heat exchanger 650, and an extractor 660.

[First heat exchanger]

In the absorption chiller, the first heat exchanger 610 and the absorber 620 may be provided in one shell so that a refrigerant evaporated in the first heat exchanger 610 easily flows to the absorber 620. A sidewall partitioning the inside of the shell into an evaporation region in which the refrigerant is evaporated and an absorption region in which the refrigerant is absorbed in the strong solution and a first eliminator disposed above the side wall to guide a gas refrigerant in the evaporation region so as to allow the gas refrigerant to move into the absorption region may be disposed inside the first shell.

The first heat exchanger 610 may further include a refrigerant sprayer 611 for spraying a refrigerant into an evaporation region. In the first heat exchanger 610, a gas refrigerant sprayed by the refrigerant sprayer 511 and a cold and hot water line 691 to be described later are heat-exchanged with each other to generate cold or hot water required for cooling or heating.

Also, when the cold water flows through the cold and hot water line 691, the refrigerant sprayed from the refrigerant sprayer 11 may be heat-exchanged with the cold water of the cold and hot water line 691b so as to be changed into a gas refrigerant, and the gas refrigerant may pass through the first eliminator to move to an absorption region.

The first heat exchanger 610 may further include a pumping passage 612 for guiding the liquid refrigerant dropping to a lower portion of the evaporation region to the refrigerant sprayer 611 and a refrigerant pump 613 installed in the pumping passage 612. The liquid refrigerant may flow to the pumping passage 12 due to the operation of the refrigerant pump 613 to flow to the refrigerant sprayer 611.

[Absorber]

The absorber 620 is configured to absorb the gas refrigerant evaporated in the first heat exchanger 610 into the absorption solution and may include an absorption solution sprayer 621 for spraying the absorption solution to the absorption region. The gas refrigerant moving from the evaporation region to the absorption region may be absorbed by the absorption solution sprayed from the absorption solution sprayer 621.

Also, a mixing line 622 through which a liquid refrigerant within the first heat exchanger 610 flows to a lower side of the absorber 620 may be disposed in the sidewall that partitions the inside into the first heat exchanger 610 and the absorber 620. Also, a first valve 623 for selectively opening and closing the mixing line 622 may be provided in the mixing line 622. The absorber is configured to introduce a condensed liquid refrigerant into the absorber 620 when the absorption cold and hot water dispenser operate to perform the heating operation, if the gas refrigerant is condensed into the liquid refrigerant by the heat exchange between the gas refrigerant of the first heat exchanger 610 and the hot water flowing he cold and hot water line 691.

[First regenerator]

The first regenerator 630 is configured to receive the weak solution obtained by absorbing the gas refrigerant from the absorber 620 to primarily regenerate the weak solution, thereby generating the intermediate solution. The first regenerator 630 may heat the weak solution supplied from the absorber 620 to separate the refrigerant mixed with the weak solution so as to generate the gas refrigerant, thereby change the weak solution into the intermediate solution.
The first regenerator 630 includes a burner 631 for heating the weak solution, a blower, and a gas refrigerant outlet 632 through which the gas refrigerant separated by the burner 631 flows.

[Second regenerator]

The second regenerator 640 is configured to receive the primarily regenerated intermediate solution from the first regenerator 630 to secondarily regenerate the intermediate solution, thereby generating a strong solution. In the second regenerator 640, the strong solution supplied from the first regenerator 630 may be heat-exchanged with the gas refrigerant flowing from the first regenerator 630 to separate the refrigerant mixed in the strong solution, thereby changing the intermediate solution into the strong solution.

[Second heat exchanger]

The second heat exchanger 650 condenses the gas refrigerant separated in the process of generating the strong solution in the second regenerator 640 and provides a space into which the gas refrigerant generated from the first regenerator 630 flows.
In the absorption chiller (the cold and hot water dispenser), the second regenerator 640 and the second heat exchanger 650 may be provided in one shell so that the gas refrigerant separated by the secondary regeneration in the second regenerator 640 easily flows to the second heat exchanger 650. Also, the shell may further include a sidewall partitioning a regeneration region in which the intermediate solution is secondarily regenerated into the strong solution and a condensation region in which the gas refrigerant is condensed and a second eliminator disposed above the sidewall so that the gas refrigerant generated in the regeneration region moves to the condensation region.

[Extractor]

The extractor 660 is a part that is connected to the absorber 620 and the second heat exchanger 640 to discharge a non-condensed gas generated in the absorption cold and hot dispenser to the outside. In detail, the non-condensed gas within the absorber 620 and the second heat exchanger 640 may be introduced into the extractor 660, and also, a weak solution of the absorber 620 may be introduced into the extractor 660. Also, in the extractor 660, the introduced weak solution may absorb the gas refrigerant mixed with the non-condensed gas, and the weak solution absorbing the gas refrigerant may be reintroduced into the absorber 620.
The absorption cold and hot dispenser according to an embodiment of the present invention may further include a cold and hot water line 691, absorption solution line 671, 672, 674, 675, and 676, a cooling water line 693, refrigerant lines 633 and 635, and an extraction line.

[Cold and hot water line]

The cold and hot water line 691 is a line in which cold water flows during the cooling operation of the absorption hot and cold water dispenser, and hot water flows during the heating operation of the absorption hot and cold water dispenser. In detail, the cold and hot water line may include a first cold and hot water line 691a into which the cold water or hot water is introduced from the outside, a second cold and hot water line 691b extending from the first cold and hot water line 691a and disposed inside the first heat exchanger 610 so as to be heat-exchanged with the refrigerant, and a third cold and hot water line 691c extending together with an outlet-side of the second cold and hot water line 691b to discharge the heat-exchanged cold water or hot water to the outside.
Here, the second cold and hot water line 691b is a heat transfer pipe in which heat is exchanged with the refrigerant. Therefore, the second cold and hot water line 691b is referred to as an eighth heat transfer pipe.

[Absorption solution line]

The absorption solution line may include a first absorption solution line 671 extending from the absorber 620 to the first regenerator 630 so that the weak solution within the absorber 620 flows to the first regenerator 630, a second absorption solution line 672 connected to the first regenerator 630 so that the intermediate solution that is primarily regenerated from the first regenerator 630 flows, a first branch part 673 through which the intermediate solution flowing through the second absorption solution line 672 is branched, a third absorption solution line 674 extending from the first branch part 673 to the second regenerator 640 so that the intermediate solution is introduced into the second regenerator 640, a fourth absorption solution line 675 extending from the first branch part 673 to the absorber so that the intermediate solution is selectively introduced into the absorber 620, and a fifth absorption solution line 676 extending from the second regenerator 640 to the absorber 620 so that the strong solution within the second regenerator 640 is introduced into the absorber 620.

The first absorption solution line 671 may include a first absorption solution pump 625 for adjusting an amount of weak solution introduced from the absorber 620 to the first regenerator 360.

[Cooling water line]

The cooling water line 693 may include a first cooling water line 693a into which the cooling water is introduced from the outside, a second cooling water line 693b connected to the first cooling water line 693a and disposed inside the absorber 620 to absorb heat when the strong solution introduced into the absorber 620 absorbs heat generated by absorbing the gas refrigerant, a third cooling water line through which the cooling water is introduced from the second cooling water line 693b to the second heat exchanger, a fourth cooling water line 693c connected to the third cooling water line and disposed within the second heat exchanger 650 so as to be heat-exchanged with the gas refrigerant within the second heat exchanger 650, and a fifth cooling water line 693d connected to the fourth cooling water line 693c to discharge the heat-exchanged cooling water to the outside.

Here, each of the second cooling water line 693b and the fourth cooling water line 693c is a heat transfer pipe through which the heat exchange is performed. Accordingly, the second cooling water line 693b is referred to as a ninth heat transfer pipe, and the fourth cooling water line 693c is referred to as a tenth heat transfer pipe.

[Refrigerant line]

The refrigerant line may include a first refrigerant line 633 extending from the gas refrigerant outlet 632 of the first regenerator 630 to the second regenerator 640 so that the gas refrigerant separated from the first regenerator 630 flows, a second branch part connected to the first refrigerant line 633 so that the gas refrigerant flowing through the first refrigerant line 633 is branched, a second refrigerant line 635 extending from the second branch part 634 to the second regenerator 640 so that the gas refrigerant flows to the second regenerator, a third refrigerant line 634 connected to the second refrigerant line 635 and disposed within the second regenerator 640 so as to be heat-exchanged with the intermediate solution within the second regenerator 640, thereby condensing the gas refrigerant therein, a fourth refrigerant line extending from the third refrigerant line 634 to the second heat exchanger 650 to supply the refrigerant condensed by being heat-exchanged in the second regenerator 640 to the second heat exchanger 650, and a fifth refrigerant line 636 extending from the second heat exchanger 650 to the first heat exchanger 610 so that the refrigerant condensed from the second heat exchanger 650 and the refrigerant introduced from the third refrigerant line 634 flow to the first heat exchanger 610.

Here, the third refrigerant line 634 is a heat transfer pipe for the heat exchange with the intermediate solution. Accordingly, the third refrigerant line 634 is referred to as an eleventh heat transfer pipe.

Also, the refrigerant line may further includes a sixth refrigerant line 637 extending from the second branch part to the absorber to selectively introduce the gas refrigerant flowing through the first refrigerant line 633 into the absorber. In this case, the sixth refrigerant line 637 may include a valve for controlling a flow of the gas refrigerant flowing into the absorber.

In detail, the gas refrigerant separated from the first regenerator may flow through the first refrigerant line 633, the second refrigerant line 635, and the sixth refrigerant line 637, and the gas refrigerant the liquid refrigerant may coexist in the third refrigerant line 634 because the gas refrigerant is condensed by being heat-exchanged with the intermediate solution. Also, the condensed liquid refrigerant may flow through the fourth refrigerant line and the fifth refrigerant line.

[Low-temperature, high-temperature, and drain heat exchanger]

The absorption cold and hot water dispenser according to the present invention may further include a low-temperature heat exchanger 670, a high-temperature heat exchanger 680, and a drain heat exchanger. The description in this regard employs the first embodiment.

[Heat transfer pipe]

As described above, the second cold and hot water line 691b, the second cooling water line 693b, the fourth cooling water line 693c, and the third refrigerant line 634 are referred to as eighth to eleventh heat transfer pipes. The ductile stainless steel pipe described in the first embodiment may be used as at least one heat transfer pipe of the eighth to eleventh heat transfer pipes.

Detailed descriptions of a minimum thickness, an effect, and a ductile stainless steel of each of the eighth to eleventh heat transfer pipes are derived from the descriptions according to the first embodiment.

## Claims

1. An absorption chiller which comprises an evaporator (10), an absorber (20, 50), a regenerator (30, 40, 55), and a condenser (70) and through which an absorption solution and a refrigerant circulate, the absorption chiller comprising:

   a heat transfer pipe (16b, 25b, 25d, 25f, 35b, 35d, 35f) which is disposed in at least one of the evaporator (10), the absorber (20, 50), the regenerator (30, 40, 55), or the condenser (70) and through which water flows, wherein the heat transfer pipe comprises a ductile stainless steel pipe,
   wherein the stainless steel comprises:

   | | |
   |---|---|
   | C: | 0.03 wt% or less; |
   | Si: | more than 0 wt% and less than 1.7 wt%, |
   | Mn: | 1.5 wt% to 3.5 wt%, |
   | Cr: | 15 wt% to 18 wt%; |
   | Ni: | 7.0 wt% to 9.0 wt%; |
   | Cu: | 1.0 wt% to 4.0 wt%; |
   | Mo: | 0.03 wt% or less; |
   | P: | 0.04 wt% or less; |
   | S: | 0.04 wt% or less; and and |
   | N: | 0.03 wt% or less; |

   wherein the stainless steel has an austenite matrix structure of 99% or more, and a delta ferrite matrix structure of 1% or less, on the basis of a grain size area; and
   an average grain diameter of the austenite matrix structure is about 30 $\mu$m to about 60 $\mu$m;
   wherein the absorption chiller further comprises:

   a cold water line (16) configured to guide cold water so as to be heat-exchanged in the evaporator (10);
   a cooling water line (25) configured to guide cooling water so as to be heat-exchanged in the absorber (20, 50) and the condenser (70); and
   a hot water line (35) configured to guide hot water or steam so as to be heat-exchanged in the regenerator (30, 40, 55),
   wherein the heat transfer pipe (16b, 25b, 25d, 25f, 35b, 35d, 35f) is provided in at least one of the cold water line (16), the cooling water line (25), and the hot water line (35);

   (i) wherein the heat transfer pipe comprises a first heat transfer pipe (16b) configured to constitute at least a portion of the cold water line and disposed within the evaporator (10) so as to be heat-exchanged with the refrigerant, and the first heat transfer pipe (16b) has an outer diameter of about 12.7 mm to about 16 mm,

   wherein the outer diameter of the first heat transfer pipe (16b) is about 12.7 mm, and an inner diameter of the first heat transfer pipe (16b) is about 12.434 mm or less, or
   the outer diameter of the first heat transfer pipe (16b) is about 16 mm, and the inner diameter of the first heat transfer pipe (16b) is about 15.717 mm or less; and/or

(ii) wherein the heat transfer pipe comprises a second heat transfer pipe (25b) configured to constitute at least a portion of the cooling water line (25) and disposed within the absorber (20, 50) so as to be heat-exchanged, and
the second heat transfer pipe (25b) has an outer diameter of about 16 mm and an inner diameter of about 15.717 mm or less; and/or
(iii) wherein the regenerator (30, 40, 55) comprises:

> a first regenerator (30) configured to primarily regenerate the absorption solution; and
> a second regenerator (40) configured to secondarily regenerate the absorption solution,
> wherein the heat transfer pipe comprises:
>
> > a third heat transfer pipe (35b) configured to constitute at least a portion of the hot water line (35) and disposed within the first regenerator (30) so as to be heat-exchanged; and
> > a fourth heat transfer pipe (35d) configured to constitute at least a portion of the hot water line (35) and disposed within the second regenerator (40) so as to be heat-exchanged;
> > wherein the third heat transfer pipe (35b) has an outer diameter of about 16 mm and an inner diameter of about 15.717 mm or less; and/or wherein the fourth heat transfer pipe (35d) has an outer diameter of about 19.05 mm and an inner diameter of about 18.751 mm or less;

(iv) wherein the absorption chiller further comprises:

> an auxiliary absorber (50) configured to allow an auxiliary absorption solution to absorb a gas refrigerant supplied by the regenerator (30, 40, 55); and
> an auxiliary regenerator (55) configured to regenerate the auxiliary absorption solution,
> wherein the heat transfer pipe comprises:
>
> > a fifth heat transfer pipe (25d) configured to constitute at least a portion of the cooling water line (25) and disposed within the auxiliary absorber (50) so as to be heat-exchanged;
> > a sixth heat transfer pipe (25f) configured to constitute at least a portion of the cooling water line (25) and disposed within the condenser (70) so as to be heat-exchanged; and
> > a seventh heat transfer pipe (35f) configured to constitute at least a portion of the hot water line (35) and disposed within the auxiliary regenerator (55) so as to be heat-exchanged;
> > wherein the fifth heat transfer pipe (25d) has an outer diameter of about 19.05 mm and an inner diameter of about 18.751 mm or less and/or wherein the sixth heat transfer pipe (25f) has an outer diameter of about 19.05 mm and an inner diameter of about 18.751 mm or less; and/or wherein the seventh heat transfer pipe (35f) has an outer diameter of about 19.05 mm and an inner diameter of about 18.751 mm or less.

**Patentansprüche**

1. Ein Absorptionskühler, der einen Verdampfer (10), einen Absorber (20, 50), einen Regenerator (30, 40, 55) und einen Kondensator (70) umfasst und durch welchen eine Absorptionslösung und ein Kältemittel zirkulieren, wobei der Absorptionskühler umfasst:

> ein Wärmeübertragungsrohr (16b, 25b, 25d, 25f, 35b, 35d, 35f), das in mindestens einem aus dem Verdampfer (10), dem Absorber (20, 50), dem Regenerator (30, 40, 55) oder dem Kondensator (70) angeordnet ist und durch welches Wasser fließt, wobei das Wärmeübertragungsrohr ein duktiles Edelstahlrohr umfasst,
> wobei der Edelstahl umfasst:
>
> > C: 0,03 Gew.-% oder weniger;
> > Si: mehr als 0 Gew.-% und weniger als 1,7 Gew.-%;
> > Mn: 1,5 Gew.-% bis 3,5 Gew.-%;
> > Cr: 15 Gew.-% bis 18 Gew.-%;
> > Ni: 7,0 Gew.-% bis 9,0 Gew.-%;
> > Cu: 1,0 Gew.-% bis 4,0 Gew.-%;
> > Mo: 0,03 Gew.-% oder weniger;
> > P: 0,04 Gew.-% oder weniger;

S: 0,04 Gew.-% oder weniger; und

N: 0,03 Gew.-% oder weniger;

wobei der Edelstahl eine Austenit-Matrixstruktur von 99% oder mehr und eine Delta-Ferrit-Matrixstruktur von 1% oder weniger, bezogen auf die Korngrößenfläche, aufweist; und

ein mittlerer Korndurchmesser der Austenit-Matrixstruktur etwa 30 μm bis etwa 60 μm beträgt;

wobei der Absorptionskühler ferner umfasst:

eine Kaltwasserleitung (16), die so konfiguriert ist, dass sie Kaltwasser derart leitet, dass in dem Verdampfer (10) ein Wärmeaustausch stattfindet;

eine Kühlwasserleitung (25), die so konfiguriert ist, dass sie Kühlwasser derart leitet, dass in dem Absorber (20, 50) und in dem Kondensator (70) ein Wärmeaustausch stattfindet; und

eine Heißwasserleitung (35), die so konfiguriert ist, dass sie Heißwasser oder Dampf derart leitet, dass in dem Regenerator (30, 40, 55) ein Wärmeaustausch stattfindet,

wobei das Wärmeübertragungsrohr (16b, 25b, 25d, 25f, 35b, 35d, 35f) in mindestens einer aus der Kaltwasserleitung (16), der Kühlwasserleitung (25) und der Heißwasserleitung (35) vorgesehen ist;

(i) wobei das Wärmeübertragungsrohr ein erstes Wärmeübertragungsrohr (16b) umfasst, das so konfiguriert ist, dass es mindestens einen Teil der Kaltwasserleitung ausmacht und in dem Verdampfer (10) derart angeordnet ist, dass mit dem Kältemittel ein Wärmeaustausch stattfindet, und

das erste Wärmeübertragungsrohr (16b) einen Außendurchmesser von etwa 12,7 mm bis etwa 16 mm aufweist,

wobei der Außendurchmesser des ersten Wärmeübertragungsrohrs (16b) etwa 12,7 mm beträgt und ein Innendurchmesser des ersten Wärmeübertragungsrohrs (16b) etwa 12,434 mm oder weniger beträgt, oder

der Außendurchmesser des ersten Wärmeübertragungsrohrs (16b) etwa 16 mm beträgt und der Innendurchmesser des ersten Wärmeübertragungsrohrs (16b) etwa 15,717 mm oder weniger beträgt; und/oder

(ii) wobei das Wärmeübertragungsrohr ein zweites Wärmeübertragungsrohr (25b) umfasst, das so konfiguriert ist, dass es mindestens einen Teil der Kühlwasserleitung (25) ausmacht und in dem Absorber (20, 50) derart angeordnet ist, dass ein Wärmeaustausch stattfindet, und

das zweite Wärmeübertragungsrohr (25b) einen Außendurchmesser von etwa 16 mm und einen Innendurchmesser von etwa 15,717 mm oder weniger aufweist; und/oder

(iii) wobei der Regenerator (30, 40, 55) umfasst:

einen ersten Regenerator (30), der so konfiguriert ist, dass er primär die Absorptionslösung regeneriert; und

einen zweiten Regenerator (40), der so konfiguriert ist, dass er sekundär die Absorptionslösung regeneriert,

wobei das Wärmeübertragungsrohr umfasst:

ein drittes Wärmeübertragungsrohr (35b), das so konfiguriert ist, dass es mindestens einen Teil der Heißwasserleitung (35) ausmacht und in dem ersten Regenerator (30) derart angeordnet ist, dass ein Wärmeaustausch stattfindet; und

ein viertes Wärmeübertragungsrohr (35d), das so konfiguriert ist, dass es mindestens einen Teil der Heißwasserleitung (35) ausmacht und in dem zweiten Regenerator (40) derart angeordnet ist, dass ein Wärmeaustausch stattfindet;

wobei das dritte Wärmeübertragungsrohr (35b) einen Außendurchmesser von etwa 16 mm und einen Innendurchmesser von etwa 15,717 mm oder weniger aufweist; und/oder wobei das vierte Wärmeübertragungsrohr (35d) einen Außendurchmesser von etwa 19,05 mm und einen Innendurchmesser von etwa 18,751 mm oder weniger aufweist;

(iv) wobei der Absorptionskühler ferner umfasst:

einen Hilfsabsorber (50), der so konfiguriert ist, dass eine Hilfsabsorptionslösung ein von dem Regenerator (30, 40, 55) zugeführtes gasförmiges Kältemittel absorbieren kann; und

einen Hilfsregenerator (55), der so konfiguriert ist, dass er die Hilfsabsorptionslösung regeneriert,
wobei das Wärmeübertragungsrohr umfasst:

ein fünftes Wärmeübertragungsrohr (25d), das so konfiguriert ist, dass es mindestens einen Teil der Kühlwasserleitung (25) ausmacht und in dem Hilfsabsorber (50) derart angeordnet ist, dass ein Wärmeaustausch stattfindet;

ein sechstes Wärmeübertragungsrohr (25f), das so konfiguriert ist, dass es mindestens einen Teil der Kühlwasserleitung (25) ausmacht und in dem Kondensator (70) derart angeordnet ist, dass ein Wärmeaustausch stattfindet; und

ein siebtes Wärmeübertragungsrohr (35f), das so konfiguriert ist, dass es mindestens einen Teil der Heißwasserleitung (35) ausmacht und in dem Hilfsregenerator (55) derart angeordnet ist, dass ein Wärmeaustausch stattfindet;

wobei das fünfte Wärmeübertragungsrohr (25d) einen Außendurchmesser von etwa 19,05 mm und einen Innendurchmesser von etwa 18,751 mm oder weniger aufweist und/oder wobei das sechste Wärmeübertragungsrohr (25f) einen Außendurchmesser von etwa 19,05 mm und einen Innendurchmesser von etwa 18,751 mm oder weniger aufweist; und/oder wobei das siebte Wärmeübertragungsrohr (35f) einen Außendurchmesser von etwa 19,05 mm und einen Innendurchmesser von etwa 18,751 mm oder weniger aufweist.

**Revendications**

1. Refroidisseur à absorption qui comprend un évaporateur (10), un absorbeur (20, 50), un régénérateur (30, 40, 55), et un condenseur (70) et à travers lequel circulent une solution d'absorption et un réfrigérant, le refroidisseur à absorption comprenant :

un tuyau de transfert de chaleur (16b, 25b, 25d, 25f, 35b, 35d, 35f) qui est disposé dans au moins l'un parmi l'évaporateur (10), l'absorbeur (20, 50), le régénérateur (30, 40, 55) et le condenseur (70) et à travers lequel de l'eau circule, lequel tuyau de transfert de chaleur comprend un tuyau en acier inoxydable ductile,
dans lequel l'acier inoxydable comprend :

C : 0,03 % en poids ou moins ;
Si : plus de 0 % en poids et moins de 1,7 % en poids,
Mn : 1,5 % en poids à 3,5 % en poids,
Cr : 15 % en poids à 18 % en poids ;
Ni : 7,0 % en poids à 9,0 % en poids ;
Cu : 1,0 % en poids à 4,0 % en poids ;
Mo : 0,03 % en poids ou moins ;
P : 0,04 % en poids ou moins ;
S : 0,04 % en poids ou moins ; et
N: 0,03 % en poids ou moins ;
dans lequel l'acier inoxydable a une structure de matrice d'austénite à raison de 99 % ou plus, et une structure de matrice de ferrite delta à raison de 1 % ou moins, sur la base de la superficie des grains ; et le diamètre de grain moyen de la structure de matrice d'austénite est d'environ 30 μm à environ 60 μm ;
dans lequel le refroidisseur à absorption comprend en outre :

une ligne d'eau froide (16) configurée pour guider de l'eau froide de façon à subir un échange de chaleur dans l'évaporateur (10) ;
une ligne d'eau de refroidissement (25) configurée pour guider de l'eau de refroidissement de façon à subir un échange de chaleur dans l'absorbeur (20, 50) et le condenseur (70) ; et
une ligne d'eau chaude (35) configurée pour guider de l'eau chaude ou de la vapeur de façon à subir un échange de chaleur dans le régénérateur (30, 40, 55),
dans lequel le tuyau de transfert de chaleur (16b, 25b, 25d, 25f, 35b, 35d, 35f) est disposé dans au moins l'une parmi la ligne d'eau froide (16), la ligne d'eau de refroidissement (25), et la ligne d'eau chaude (35) ;

(i) dans lequel le tuyau de transfert de chaleur comprend un premier tuyau de transfert de chaleur (16b) configuré pour constituer au moins une portion de la ligne d'eau froide et disposé à l'intérieur de l'évaporateur (10) de façon à subir un échange de chaleur avec le réfrigérant, et le premier tuyau de transfert de chaleur (16b) a un diamètre extérieur d'environ 12,7 mm à environ 16 mm,

dans lequel le diamètre extérieur du premier tuyau de transfert de chaleur (16b) est d'environ 12,7 mm, et le diamètre intérieur du premier tuyau de transfert de chaleur (16b) est d'environ 12,434 mm ou moins, ou le diamètre extérieur du premier tuyau de transfert de chaleur (16b) est d'environ 16 mm, et le diamètre intérieur du premier tuyau de transfert de chaleur (16b) est d'environ 15,717 mm ou moins ; et/ou

(ii) dans lequel le tuyau de transfert de chaleur comprend un deuxième tuyau de transfert de chaleur (25b) configuré pour constituer au moins une portion de la ligne d'eau de refroidissement (25) et disposé à l'intérieur de l'absorbeur (20, 50) de façon à subir un échange de chaleur, et

le deuxième tuyau de transfert de chaleur (25b) a un diamètre extérieur d'environ 16 mm et un diamètre intérieur d'environ 15,717 mm ou moins ; et/ou

(iii) dans lequel le générateur (30, 40, 55) comprend :

un premier régénérateur (30) configuré pour régénérer principalement la solution d'absorption ; et
un deuxième régénérateur (40) configuré pour régénérer secondairement la solution d'absorption,
dans lequel le tuyau de transfert de chaleur comprend :

un troisième tuyau de transfert de chaleur (35b) configuré pour constituer au moins une portion de la ligne d'eau chaude (35) et disposé à l'intérieur du premier régénérateur (30) de façon à subir un échange de chaleur ; et
un quatrième tuyau de transfert de chaleur (35d) configuré pour constituer au moins une portion de la ligne d'eau chaude (35) et disposé à l'intérieur du deuxième régénérateur (40) de façon à subir un échange de chaleur ;
dans lequel le troisième tuyau de transfert de chaleur (35b) a un diamètre extérieur d'environ 16 mm et un diamètre intérieur d'environ 15,717 mm ou moins ; et/ou dans lequel le quatrième tuyau de transfert de chaleur (35d) a un diamètre extérieur d'environ 19,05 mm et un diamètre intérieur d'environ 18,751 mm ou moins ;

(iv) lequel refroidisseur à absorption comprenant en outre :

un absorbeur auxiliaire (50) configuré pour permettre à une solution d'absorption auxiliaire d'absorber un réfrigérant gazeux fourni par le régénérateur (30, 40, 55) ; et
un régénérateur auxiliaire (55) configuré pour régénérer la solution d'absorption auxiliaire,
dans lequel le tuyau de transfert de chaleur comprend :

un cinquième tuyau de transfert de chaleur (25d) configuré pour constituer au moins une portion de la ligne d'eau de refroidissement (25) et disposé à l'intérieur de l'absorbeur auxiliaire (50) de façon à subir un échange de chaleur ;
un sixième tuyau de transfert de chaleur (25f) configuré pour constituer au moins une portion de la ligne d'eau de refroidissement (25) et disposé à l'intérieur du condenseur (70) de façon à subir un échange de chaleur ; et
un septième tuyau de transfert de chaleur (35f) configuré pour constituer au moins une portion de la ligne d'eau chaude (35) et disposé à l'intérieur du régénérateur auxiliaire (55) de façon à subir un échange de chaleur ;
dans lequel le cinquième tuyau de transfert de chaleur (25d) a un diamètre extérieur d'environ 19,05 mm et un diamètre intérieur d'environ 18,751 mm ou moins et/ou dans lequel le sixième tuyau de transfert de chaleur (25f) a un diamètre extérieur d'environ 19,05 mm et un diamètre intérieur d'environ 18,751 mm ou moins ; et/ou dans lequel le septième tuyau de transfert de chaleur (35f) a un diamètre extérieur d'environ 19,05 mm et un diamètre intérieur d'environ 18,751 mm ou moins.

Fig. 1

Fig. 2

Fig. 3

Fig. 4

Fig. 5

Fig. 6

```
                  ┌─────────────┐
                  │    START    │
                  └──────┬──────┘
                         │
                         ▼
         ┌───────────────────────────────┐
         │       PIPE MANUFACTURE        │──── S11
         └───────────────┬───────────────┘
                         │
                         ▼
         ┌───────────────────────────────┐
         │         FIN FORMATION         │──── S12
         └───────────────┬───────────────┘
                         │
                         ▼
         ┌───────────────────────────────┐
         │       PROCESSING PROCESS      │──── S13
         └───────────────┬───────────────┘
                         │
                         ▼
                  ┌─────────────┐
                  │     END     │
                  └─────────────┘
```

Fig. 7

(a)

(b)

(c)

Fig. 8

Fig. 9

Fig. 10

Fig. 11

| | |
|---|---|
| START | |
| COLD ROLLING | S1 |
| SLITTING | S2 |
| FORMING | S3 |
| WELDING | S4 |
| CUTTING | S5 |
| DRAWING | S6 |
| BRIGHT ANNEALING | S7 |
| END | |

Fig. 12

Fig. 13

Fig. 14

Fig. 15

Fig. 16

Fig. 17

Fig. 18

Fig. 19

Fig. 20

Fig. 21

Fig. 22

Ductile Stainless Steel Pipe          Aluminum Pipe          Copper Pipe

Fig. 23

| | Corrosion Depth(µm) | | | | | | Average | Maximum | Deviation |
|---|---|---|---|---|---|---|---|---|---|
| Sample Number | 1 | | 2 | | 3 | | | | |
| Measurement Position | 1 | 2 | 1 | 2 | 1 | 2 | | | |
| Ductile Stainless Steel Pipe | 8 | 9 | 26 | 25 | 36 | 9 | 19 | 36 | 12 |
| Copper Pipe | 16 | 16 | 49 | 8 | 28 | 17 | 22 | 49 | 15 |
| Aluminum Pipe | 91 | 64 | 95 | 105 | 104 | 110 | 95 | 110 | 17 |

Fig. 24

Fig. 25

(a)

(b)

Fig. 26

Fig. 27

Fig. 28